(19) Europäisches Patentamt
European Patent Office
Office européen des brevets

(11) EP 3 778 726 A1

(12) EUROPEAN PATENT APPLICATION
published in accordance with Art. 153(4) EPC

(43) Date of publication:
17.02.2021 Bulletin 2021/07

(51) Int Cl.:
C08J 5/18 $^{(2006.01)}$    B32B 27/36 $^{(2006.01)}$
H01M 2/02 $^{(2006.01)}$

(21) Application number: 19775853.5

(22) Date of filing: 26.03.2019

(86) International application number:
PCT/JP2019/012939

(87) International publication number:
WO 2019/189221 (03.10.2019 Gazette 2019/40)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 27.03.2018 JP 2018060587

(71) Applicant: Dai Nippon Printing Co., Ltd.
Shinjuku-ku,
Tokyo 162-8001 (JP)

(72) Inventors:
• ISHITOBI, Tatsuro
  Tokyo 162-8001 (JP)
• YAMASHITA, Rikiya
  Tokyo 162-8001 (JP)
• TAKAHAGI, Atsuko
  Tokyo 162-8001 (JP)
• YOKOTA, Kazuhiko
  Tokyo 162-8001 (JP)
• KOMAI, Takayuki
  Tokyo 162-8001 (JP)
• NAKAMURA, Shinichiro
  Tokyo 162-8001 (JP)

(74) Representative: Müller-Boré & Partner
Patentanwälte PartG mbB
Friedenheimer Brücke 21
80639 München (DE)

(54) POLYETHYLENE TEREPHTHALATE FILM FOR CELL PACKAGING MATERIAL, CELL PACKAGING MATERIAL, METHOD FOR MANUFACTURING CELL PACKAGING MATERIAL, AND CELL

(57) The present invention provides a condition for a substrate layer whereby a cell packaging material obtained by layering a substrate layer, a barrier layer, and a thermally fusible resin layer in this order is provided with excellent moldability. The substrate layer comprises a polyethylene terephthalate film, and the heat of fusion difference ΔH1-2 thereof determined by the method below is 6 J/g. In accordance with JIS K7122-2012, the film was heated from a temperature of 0°C to a temperature of 300°C using a differential scanning calorimeter under conditions of a temperature increase rate of 10°C/minute, and a heat of fusion H1 measured a first time was measured, and after measurement of this heat of fusion HI, the film was cooled from a temperature of 300°C to a temperature of 0°C at a temperature decrease rate of 10°C/minute, after which the film was heated from a temperature of 0°C to a temperature of 300°C under conditions of a temperature increase rate of 10°C/minute, and a heat of fusion H2 measured a second time was measured. The heat of fusion H2 was subtracted from the heat of fusion H1 to calculate the heat of fusion difference ΔH1-2.

FIG. 2

**Description**

TECHNICAL FIELD

The present invention relates to a polyethylene terephthalate film for a battery packaging material, a battery packaging material, a method for manufacturing a battery packaging material, and a method for manufacturing a battery packaging material.

BACKGROUND ART

Various types of batteries have been developed heretofore, and in every battery, a packaging material is an essential member for sealing battery elements such as an electrode and an electrolyte. Metallic packaging materials have been often used heretofore as battery packages, but in recent years, batteries have been required to be diversified in shape, and desired to be thinner and lighter as performance of, for example, electric cars, hybrid electric cars, personal computers, cameras and mobile phones has been enhanced. However, metallic packaging materials that have often been heretofore used have the disadvantage that it is difficult to keep up with diversification in shape, and there is a limit on weight reduction.

Thus, in recent years, a film-shaped laminate with a base material layer, an adhesive layer, a barrier layer and a heat-sealable resin layer laminated in this order has been proposed as a packaging material which is easily processed into diversified shapes and is capable of achieving thickness reduction and weight reduction (see, for example, Patent Document 1). When such a film-shaped battery packaging material is used, a battery element is sealed with the packaging material by heat-welding the peripheral edge of the packaging material by heat sealing while the heat-sealable resin layers located at the innermost layer of the packaging material face each other.

A resin film such as a polyamide film or a polyester film is used for the base material layer of such a battery packaging material.

PRIOR ART DOCUMENT

PATENT DOCUMENT

Patent Document 1: Japanese Patent Laid-open Publication No. 2014-197559

SUMMARY OF THE INVENTION

PROBLEMS TO BE SOLVED BY THE INVENTION

When a film-shaped battery packaging material is used for a large battery such as a vehicle battery, a polyethylene terephthalate film may be used for a base material layer for enhancing resistance to dielectric breakdown.

However, polyethylene terephthalate films which have been heretofore used as battery packaging materials are poor in moldability while having excellent resistance to dielectric breakdown. In particular, a film-shaped battery packaging material is required to have very high moldability because the film-shaped battery packaging material is subjected to cold molding etc. for the purpose of forming a space for housing a battery element although the film-shaped battery packaging material is very thin. Thus, a polyethylene terephthalate film needed for such a battery packaging material is required to have high moldability.

Under these circumstances, a main object of the present invention is to provide a polyethylene terephthalate film for a battery packaging material which enables a battery packaging material to exhibit excellent moldability when the polyethylene terephthalate film is laminated as a base material layer of the battery packaging material together with a barrier layer and a heat-sealable resin layer.

MEANS FOR SOLVING THE PROBLEM

The present inventors have extensively conducted studies for achieving the above-described object. As a result, the present inventors have found that when a polyethylene terephthalate film having a heat of fusion difference $\Delta H_{1\text{-}2}$ (heat of fusion $H_1$ - heat of fusion $H_2$) of 6 J/g or more is used for a base material layer of a battery packaging material, the battery packaging material exhibits excellent moldability. Here, the heat of fusion difference $\Delta H_{1\text{-}2}$ is a difference between a heat of fusion $H_1$ and a heat of fusion $H_2$ which are measured using a differential scanning calorimeter in accordance with JIS K7122-2012, where the heat of fusion $H_1$ is measured in first measurement with the film heated from a temperature of 0°C to a temperature of 300°C under the condition of a temperature increase rate of 10°C/min, and the heat of fusion $H_2$ is measured in second measurement with the film heated from a temperature of 0°C to a temperature of 300°C under the condition of a temperature increase rate of 10°C/min after being cooled from a temperature of 300°C to a temperature of 0°C under the condition of a temperature decrease rate of 10°C/min after measurement of the heat of fusion $H_1$. The present invention is an invention that has been completed by further conducting studies based on the above-mentioned findings.

That is, the present invention provides inventions of aspects as listed below.

Item 1. A polyethylene terephthalate film for a battery packaging material which is used for a base material layer of a battery packaging material including a base material layer, a barrier layer and a heat-sealable resin layer in this order,

the polyethylene terephthalate film having a heat of fusion difference $\Delta H_{1-2}$ of 6 J/g or more as determined by the following method:

a heat of fusion $H_1$ and a heat of fusion $H_2$ are measured using a differential scanning calorimeter in accordance with JIS K7122-2012, where the heat of fusion $H_1$ is measured in first measurement with the film heated from a temperature of 0°C to a temperature of 300°C under the condition of a temperature increase rate of 10°C/min, and the heat of fusion $H_2$ is measured in second measurement with the film heated from a temperature of 0°C to a temperature of 300°C under the condition of a temperature increase rate of 10°C/min after being cooled from a temperature of 300°C to a temperature of 0°C under the condition of a temperature decrease rate of 10°C/min after measurement of the heat of fusion $H_1$; and the heat of fusion $H_2$ is subtracted from the heat of fusion $H_1$ to calculate the heat of fusion difference $\Delta H_{1-2}$.

Item 2. The polyethylene terephthalate film for a battery packaging material according to Item 1, wherein the polyethylene terephthalate film has a thickness of 5 $\mu$m or more.

Item 3. A battery packaging material including a laminate including a base material layer, a barrier layer and a heat-sealable resin layer in this order,

the base material layer including a polyethylene terephthalate film having a heat of fusion difference $\Delta H_{1-2}$ of 6 J/g or more, the heat of fusion difference $\Delta H_{1-2}$ being a difference between a heat of fusion $H_1$ and a heat of fusion $H_2$ which are measured using a differential scanning calorimeter in accordance with JIS K7122-2012, where the heat of fusion $H_1$ is measured in first measurement with the film heated from a temperature of 0°C to a temperature of 300°C under the condition of a temperature increase rate of 10°C/min, and the heat of fusion $H_2$ is measured in second measurement with the film heated from a temperature of 0°C to a temperature of 300°C under the condition of a temperature increase rate of 10°C/min after being cooled from a temperature of 300°C to a temperature of 0°C under the condition of a temperature decrease rate of 10°C/min after measurement of the heat of fusion $H_1$.

Item 4. A battery, wherein a battery element including at least a positive electrode, a negative electrode and an electrolyte is stored in a package formed of the battery packaging material described in item 3.

Item 5. A method for manufacturing a battery packaging material, the method including the step of preparing a laminate by laminating a base material layer, a barrier layer and a heat-sealable resin layer in this order,

the base material layer including a polyethylene terephthalate film having a heat of fusion difference $\Delta H_{1-2}$ of 6 J/g or more, the heat of fusion difference $\Delta H_{1-2}$ being a difference between a heat of fusion $H_1$ and a heat of fusion $H_2$ which are measured using a differential scanning calorimeter in accordance with JIS K7122-2012, where the heat of fusion $H_1$ is measured in first measurement with the film heated from a temperature of 0°C to a temperature of 300°C under the condition of a temperature increase rate of 10°C/min, and the heat of fusion $H_2$ is measured in second measurement with the film heated from a temperature of 0°C to a temperature of 300°C under the condition of a temperature increase rate of 10°C/min after being cooled from a temperature of 300°C to a temperature of 0°C under the condition of a temperature decrease rate of 10°C/min after measurement of the heat of fusion $H_1$.

ADVANTAGES OF THE INVENTION

According to the present invention, it is possible to provide a polyethylene terephthalate film for a battery packaging material which enables a battery packaging material to exhibit excellent moldability when the polyethylene terephthalate film is laminated as a base material layer of the battery packaging material together with a barrier layer and a heat-sealable resin layer.

BRIEF DESCRIPTION OF THE DRAWINGS

Fig. 1 is a schematic sectional view of a polyethylene terephthalate film of the present invention.
Fig. 2 is a schematic sectional view of an example of a battery packaging material in which the polyethylene terephthalate film of the present invention is used for a base material layer.
Fig. 3 is a schematic sectional view of an example of a battery packaging material in which the polyethylene terephthalate film of the present invention is used for a base material layer.

Fig. 4 is a schematic diagram (graph) illustrating a method for determining an absolute value of a heat of fusion difference $\Delta H_{1-2}$ of a polyethylene terephthalate film.

Fig. 5 is a schematic diagram illustrating a yield point and a breaking point of a stress-strain curve obtained by a tensile test.

EMBODIMENTS OF THE INVENTION

A polyethylene terephthalate film of the present invention is used for a base material layer of a battery packaging material including a base material layer, a barrier layer and a heat-sealable resin layer in this order. The polyethylene terephthalate film of the present invention has a heat of fusion difference $\Delta H_{1-2}$ of 6 J/g or more as determined by the following method.

(Method for determining heat of fusion difference $\Delta H_{1-2}$)

a heat of fusion $H_1$ and a heat of fusion $H_2$ are measured using a differential scanning calorimeter in accordance with JIS K7122-2012, where the heat of fusion $H_1$ is measured in first measurement with the film heated from a temperature of 0°C to a temperature of 300°C under the condition of a temperature increase rate of 10°C/min, and the heat of fusion $H_2$ is measured in second measurement with the film heated from a temperature of 0°C to a temperature of 300°C under the condition of a temperature increase rate of 10°C/min after being cooled from a temperature of 300°C to a temperature of 0°C under the condition of a temperature decrease rate of 10°C/min after measurement of the heat of fusion $H_1$; and the heat of fusion $H_2$ is subtracted from the heat of fusion $H_1$ to calculate the heat of fusion difference $\Delta H_{1-2}$.

The polyethylene terephthalate film of the present invention has such a specific heat of fusion difference $\Delta H_{1-2}$, and therefore enables the battery packaging material to exhibit excellent moldability when the polyethylene terephthalate film is laminated as a base material layer of the battery packaging material together with a barrier layer and a heat-sealable resin layer. The polyethylene terephthalate film of the present invention and a battery of the present invention in which the polyethylene terephthalate film is used will be described in detail below.

In this specification, a numerical range indicated by the term "A to B" means "A or more" and "B or less". For example, the expression of "2 to 15 mm" means 2 mm or more and 15 mm or less.

1. Polyethylene terephthalate film

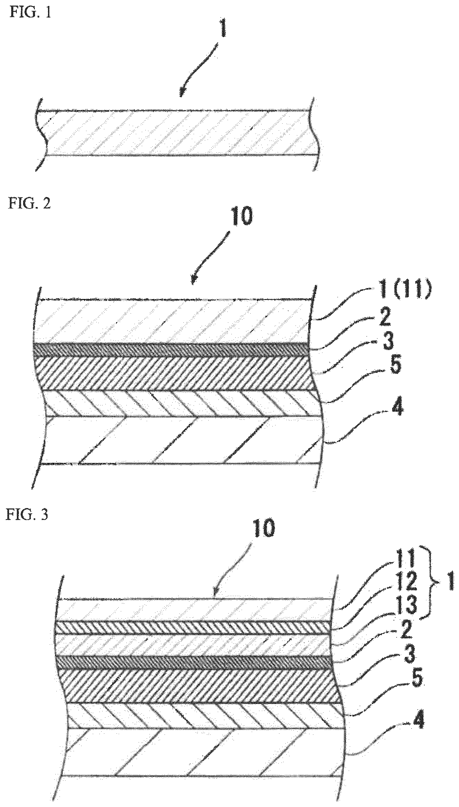

A polyethylene terephthalate film 11 of the present invention (hereinafter, "polyethylene terephthalate film" is sometimes referred to as "PET film") is a PET film for a battery packaging material. More specifically, as shown in Figs. 2 and 3, the polyethylene terephthalate film 11 of the present invention is used for a base material layer 1 of a battery packaging material 10 including the base material layer 1, a barrier layer 3 and a heat-sealable resin layer 4 in this order.

As will be described later, the base material layer 1 of the battery packaging material 10 may include at least the PET film 11 of the present invention, and the base material layer 1 may be only composed of the PET film 11 of the present invention as shown in, for example, Fig. 2, or may include, in addition to the PET film 11 of the present invention, a polyamide film 13, and another layer such as an adhesive agent layer 12 for enhancing adhesion between the polyamide film 13 and the PET film 11 as shown in, for example, Fig. 3. That is, the base material layer 1 may have a multilayer structure,

A plurality of PET films 11 of the present invention may be laminated, or in addition to the PET film 11 of the present invention, a PET film having a heat of fusion difference $\Delta H_{1-2}$ of less than 6 J/g may be laminated on the base material layer 1 of the battery packaging material 10.

When the base material layer 1 has a multilayer structure, specific examples of the structure thereof include a structure in which the PET film 11, the adhesive agent layer 12 and the polyamide film 13 are laminated in this order; a structure in which the PET film 11, the adhesive agent layer 12 and the PET film 11 are laminated in this order; a structure in which the PET film 11, the polyamide film 13 are laminated in this order; and a structure in which the PET films 11 are laminated.

Since the PET film is excellent in resistance to an electrolytic solution which may be contacted, it is preferable that the PET film is located at the outermost layer side (a side opposite to the heat-sealable resin layer) in the battery packaging material 10.

Details of the laminated configuration of the battery packaging material 10 and the composition of each layer will be described later.

The PET film 11 of the present invention has a heat of fusion difference $\Delta H_{1-2}$ of 6 J/g or more, the heat of fusion difference $\Delta H_{1-2}$ being a difference between a heat of fusion $H_1$ and a heat of fusion $H_2$ which are measured using a differential scanning calorimeter in accordance with JIS K7122-2012, where the heat of fusion $H_1$ is measured in first measurement with the film heated from a temperature of 0°C to a temperature of 300°C under the condition of a temperature increase rate of 10°C/min, and the heat of fusion $H_2$ is measured in second measurement with the film heated from a temperature of 0°C to a temperature of 300°C under the condition of a temperature increase rate of 10°C/min after being cooled from a temperature of 300°C to a temperature of 0°C under the condition of a temperature decrease rate of 10°C/min after measurement of the heat of fusion $H_1$. Since the heat of fusion difference $\Delta H_{1-2}$ of the PET film 11 is 6 J/g or more, the battery packaging material can exhibit excellent moldability. That is, since the heat of fusion difference $\Delta H_{1-2}$ is 6 J/g or more, the PET film has high crystal orientation in a state before measurement of the heat of fusion $H_1$, and has hardness in a range which is suitable for molding as a battery packaging material. More specifically, by adjusting the type of film-forming method and the conditions during film-forming (e.g. film-forming temperature, cooling temperature, cooling rate and heat setting temperature after stretching) in the process of forming the PET film 11, the heat of fusion difference $\Delta H_{1-2}$ of the PET film 11 can be set to 6 J/g or more, and accordingly excellent moldability can be exhibited. Examples of the method for forming the PET film 11 include a T-die method. The heat of fusion difference $\Delta H_{1-2}$ of the PET film 11 can be adjusted also by the molecular weight and the molecular weight distribution of the polyethylene terephthalate forming the PET film. The PET film 11 includes polyethylene terephthalate as a main constituent component, and may optionally contain additives if necessary, and the additives may be considered as an element for setting the heat of fusion difference $\Delta H_{1-2}$ within the above-described range. Among these elements, the heat setting temperature after stretching makes a large contribution as an element for setting the heat of fusion difference $\Delta H_{1-2}$ within the above-described range.

From the viewpoint of further improving the moldability of the battery packaging material, concerning the heat of fusion difference $\Delta H_{1-2}$ of the PET film 11, upper limit is preferably about 7 J/g or more, more preferably about 8 J/g or more, still more preferably about 10 J/g or more, and lower limit is preferably about 20 J/g or less, more preferably about 18 J/g or less, still more preferably about 16 J/g or less. The heat of fusion difference $\Delta H_{1-2}$ is in the range of preferably about 6 to 20 J/g, about 6 to 18 J/g, about 6 to 16 J/g, about 7 to 20 J/g, about 7 to 18 J/g, about 7-16 J/g, about 8-20 J/g, about 8-18 J/g, about 8-16 J/g, about 10-20 J/g, about 10-18 J/g, about 10-16 J/g, or about 13 to 14 J/g.

The heat of fusion $H_1$ of the PET film 11 is, for example, about 45 to 60 J/g, preferably about 47 to 56 J/g, especially preferably about 53 to 54 J/g, and the heat of fusion $H_2$ is, for example, about 39 to 43 J/g, about 40 to 42 J/g, especially preferably about 40 to 41 J/g.

In the present invention, the method for measuring the heat of fusion difference $\Delta H_{1-2}$ of the PET film is as follows.

(Measurement of heat of fusion difference $\Delta H_{1-2}$)

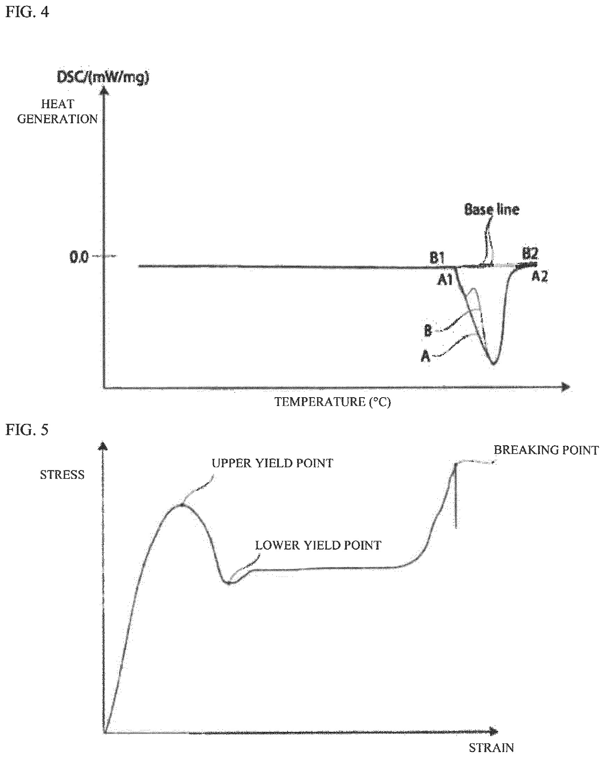

A PET film sample to be measured is set in an apparatus, then cooled from room temperature to 0°C at a rate of 10°C/min in a nitrogen atmosphere, held at 0°C for 15 minutes, and then heated to 300°C at a rate of 10°C/min. The endothermic peak appearing at this time is defined as a melt peak 1, and the associated heat of fusion is defined as $H_1$. Next, the PET film is held at 300°C for 1 minute, and cooled to 0°C at a rate of 10°C/min again. When the temperature reaches 0°C, the PET film is held for 1 minute, and heated again to 300°C at a rate of 10°C/min. The endothermic peak appearing at this time is defined as a melt peak 2, and the associated heat of fusion is defined as $H_2$ as in the case of the heat of fusion $H_1$. A difference ($H_1 - H_2$) between the two heats of fusion thus obtained is taken as a heat of fusion difference $\Delta H_{1-2}$, and an absolute value of the heat of fusion difference $\Delta H_{1-2}$ is obtained. A more specific explanation will be given below with reference to the schematic diagram of Fig. 4. The thick line A in Fig. 4 represents a schematic graph obtained when the sample is cooled from room temperature to 0°C at a rate of 10°C/min, held at 0°C for 15 minutes, and then heated to 300°C at a rate of 10°C/min (0°C-300°C graph), and the thin line B in Fig. 4 represents a graph obtained when the sample is heated to 300°C subsequent to acquirement of the line A, then held at 300°C for 1 minute, and cooled to 0°C at a rate of 10°C/min again, and when the temperature reaches 0°C, the sample is held for 1 minute, and heated to 300°C again (0°C-300°C graph). The line B graph shows an example in which two endothermic peaks are present. The heat of fusion corresponds to the area of a region surrounded by points at which the line of a portion having an endothermic peak contacts the base line in each graph. For example, the heat of fusion $H_1$ corresponds to the area of a region surrounded by two points at which a portion having an endothermic peak contacts the base line in the thick line A of Fig. 4 (of the two points, A1 is a point between a temperature of 180°C and a temperature of 200°C at which the line A departs from the base line before transition, and A2 is a point between a temperature of 260°C and a temperature of 280°C at which the line A returns to the base line after transition. For example, the heat of fusion $H_2$ corresponds to the area of a region surrounded by two points at which a portion having an endothermic peak contacts the base line in the thin line B of Fig. 4 (of the two points, B1 is a point between a temperature of 180°C and a temperature of 200°C at which the line B departs from the base line before transition, and B2 is a point between a temperature of 260°C and a temperature of 280°C at which the line B returns to the base line after transition). The melt peak of a PET film is generally present around 210 to 230°C.

When the gradient of a straight line connecting between the yield point (upper yield point) and the breaking point is measured in a stress-strain curve showing a relationship between the stress (MPa) applied to a polyethylene terephthalate film and the associated strain, which is measured by a tensile test, the ratio of the gradient $S_{TD}$ of the polyethylene terephthalate film in the transverse direction (TD) to the gradient $S_{MD}$ of the polyethylene terephthalate film in the machine direction (MD) ($S_{TD/MD}$) is preferably 0.8 or more for the PET film 11. When the gradient ratio $S_{TD/MD}$ of the PET film 11 is 0.8 or more, the moldability of the battery packaging material can be further improved. Fig. 5 shows a schematic diagram illustrating the yield point and the breaking point in a stress-strain curve obtained by a tensile test. In the present invention, the yield point refers to an upper yield point. Typically, in a biaxially oriented PET film, there is a difference in draw ratio between the MD direction and the TD direction due to its manufacturing process, and the ratio $S_{TD/MD}$ is often far from 1. Since the PET film 11 of the present invention has an appropriate value of $S_{TD/MD}$ which is close to 1, the elongation during molding of the battery packaging material is more uniform, and excellent moldability can be exhibited. The gradient ratio $S_{TD/MD}$ of the PET film 11 can be set to 0.8 or more by adjusting the type of film-forming method and the conditions during film-forming (e.g. draw ratio and heat setting temperature after stretching) in the process of forming the PET film 11.

From the viewpoint of further improving the moldability of the battery packaging material, concerning the gradient ratio $S_{TD/MD}$ of the PET film 11, lower limit is preferably about 0.8 or more, more preferably about 0.9 or more, still more preferably about 1.0 or more, and upper limit is preferably about 10.0 or less, more preferably about 7.0 or less, still more preferably about 5.0 or less. The gradient ratio $S_{TD/MD}$ is preferably in the range of about 0.8 to 10.0, about 0.8 to 7.0, about 0.8 to 5.0, about 0.9 to 10.0, about 0.9 to 7.0, about 0.9 to 5.0, about 1.0 to 10.0, about 1.0 to 7.0, about 1.0 to 5.0, about 1.0 to 1.5 or about 1.1 to 1.3.

In the present invention, the gradient ratio $S_{TD/MD}$ of the PET film can be calculated by measuring the gradient of the straight line connecting between the yield point and the breaking point in a tensile test as shown below.

(Measurement of gradient of straight line connecting between yield point and breaking point in tensile test)

The PET film is cut into samples each having a size of 100 mm $\times$ 15 mm in such a manner that the long side direction is a MD direction and the short side direction is a TD direction. Using a tensile tester, the sample is drawn at a chuck-to-chuck distance of 50 mm and a tension speed of 300 mm/min to obtain a stress-strain curve. The tensile test in the MD direction and the TD direction is conducted for each of 30 samples prepared in the same manner as described above, respectively, for each of the 30 samples prepared in the same manner, the gradients $S_{MD}$ and $S_{TD}$ of the straight line connecting between the yield point and the breaking point are measured from five stress-strain curves with the largest strains (elongations), and the gradient ratio $S_{TD/MD}$ is calculated from an average of the five gradients $S_{MD}$ and an average of the five gradients $S_{TD}$ to determine a value of the gradient ratio $S_{TD/MD}$. A sample with larger strain has a more appropriate cross-section state during preparation of the sample, and has less folds etc. which have an impact on measurement results. The gradients $S_{MD}$ and $S_{TD}$ of the straight line connecting between the yield point and the breaking point can be expressed by the following equations, respectively.

$$\text{Gradient } S_{MD} \text{ of straight line connecting between yield point and breaking}$$

$$\text{point} = \{(\text{tensile breaking stress in MD direction}) - (\text{tensile yield stress in MD}$$

$$\text{direction})\}/\{(\text{tensile breaking strain in MD direction}) - (\text{tensile yield strain in MD}$$

$$\text{direction})\}$$

$$\text{Gradient } S_{TD} \text{ of straight line connecting between yield point and breaking point}$$

$$= \{(\text{tensile breaking stress in TD direction}) - (\text{tensile yield stress in TD}$$

$$\text{direction})\}/\{(\text{tensile breaking strain in TD direction}) - (\text{tensile yield strain in TD}$$

$$\text{direction})\}$$

Gradient $S_{MD}$ of the PET film 11 is, for example, about 1.0 to 2.0, preferably 1.2 to 1.9, more preferably about 1.8 to 1.9, and the gradient $S_{TD}$ is, for example, about 1.5 to 3.0, preferably about 1.6 to 2.2, more preferably about 2.0 to 2.2.

In the tensile test, the tensile yield stress at the yield point is preferably about 95 to 125 MPa, more preferably about 100 to 125 MPa, still more preferably about 104 to 120 MPa in the MD direction, and preferably about 95 to 118 MPa, more preferably about 98 to 115 MPa in the TD direction. The absolute value of a difference in the tensile yield stress between the MD direction and the TD direction is preferably about 0 to 20 MPa, especially preferably about 0 to 16 MPa.

In the tensile test, the tensile yield strain at the yield point is preferably about 100 to 115%, more preferably about 104 to 110% in the MD direction, and preferably 100 to 115%, more preferably about 104 to 110% in the TD direction. The absolute value of a difference in the tensile yield strain between the MD direction and the TD direction is preferably about 0 to 2%, especially preferably about 0 to 0.1%.

In the tensile test, the tensile breaking stress at the breaking point is preferably about 150 to 250 MPa, more preferably about 158 to 245 MPa in the MD direction, and preferably 185 to 280 MPa, more preferably about 185 to 272 MPa, still more preferably about 192 to 272 MPa in the TD direction. The absolute value of a difference in the tensile breaking stress between the MD direction and the TD direction is preferably about 0 to 105 MPa, more preferably about 0 to 20 MPa, especially preferably about 0 to 5 MPa.

In the tensile test, the tensile breaking strain at the breaking point is preferably about 150 to 190%, more preferably about 160 to 188% in the MD direction, and preferably 160 to 190%, more preferably about 163 to 182% in the TD direction. The absolute value of a difference in the tensile breaking strain between the MD direction and the TD direction is preferably about 0 to 25%, especially preferably about 0 to 10%.

The polyethylene terephthalate film 11 of the present invention is a film composed of polyethylene terephthalate.

The thickness of the polyethylene terephthalate film 11 of the present invention is not particularly limited, and lower limit is preferably about 5 $\mu$m or more, more preferably about 7 $\mu$m or more, and upper limit is preferably about 40 $\mu$m or less, more preferably about 35 $\mu$m or less, still more preferably about 30 $\mu$m or less, from the viewpoint of reducing the thickness of the battery packaging material and improving moldability. The thickness of the polyethylene terephthalate film 11 is preferably in the range of about 5 to 40 $\mu$m, about 5 to 35 $\mu$m, about 5 to 30 $\mu$m, about 7 to 40 $\mu$m, about 7 to 35 $\mu$m or about 7 to 30 $\mu$m.

In the present invention, whether or not the polyethylene terephthalate film has a heat of fusion difference $\Delta H_{1-2}$, a gradient ratio $S_{TD/MD}$, a thickness and the like as described above is determined by measuring a single polyethylene terephthalate film. When polyethylene terephthalate is used as the base material layer of a battery packaging material composed of a laminate including a base material layer, a barrier layer and a heat-sealable resin layer in this order, the polyethylene terephthalate is obtained from the laminate (e.g. the PET film is peeled from the laminate, or layers other than the PET film are dissolved; here ensure that the PET film is not extended), and the heat of fusion difference $\Delta H_{1-2}$, the slope ratio $S_{TD/MD}$, the thickness and the like are measured to determine whether the film is the polyethylene terephthalate film of the present invention or not.

As described later, the MD direction and the TD direction of the polyethylene terephthalate film laminated on the laminate can be generally discriminated from the barrier layer described later. That is, in general, the MD and the TD of the later-described barrier layer in the process for manufacturing the battery packaging material can be discriminated. For example, when the barrier layer is composed of an aluminum foil, linear streaks called rolling indentations are formed on the surface of the aluminum foil in the rolling direction (RD: rolling direction) of the aluminum foil. Since the rolling indentations extend along the rolling direction, the rolling direction of the aluminum foil can be known by observing the surface of the aluminum foil. In the process for manufacturing the laminate, the MD of the laminate and the RD of the aluminum foil coincides with each other, and therefore by observing the surface of the aluminum foil of the laminate to identify the rolling direction (RD) of the aluminum foil, the MD of the laminate (i.e. the MD of the polyethylene terephthalate film) can be identified. Since the TD of the laminate is perpendicular to the MD of the laminate, the TD of the laminate (i.e. the TD of the polyethylene terephthalate film) can be identified.

In the present invention, the gradient ratio $S_{TD/MD}$ and the heat of fusion difference $\Delta H_{1-2}$ are different elements because they are adjusted by different methods, and are different in mechanism of improving moldability.

## 2. Battery packaging material

As described above, the PET film 11 of the present invention can be suitably used for the base material layer 1 of the battery packaging material.

Examples of the battery packaging material 10 include materials having a laminated structure with a laminate including at least the base material layer 1, the barrier layer 3 and the heat-sealable resin layer 4 in this order. Figs. 2 and 3 shows an aspect in which the base material layer 1, the adhesive agent layer 2, the barrier layer 3, the adhesive layer 5 and the heat-sealable resin layer 4 are laminated in this order as an example of a cross-sectional structure of the battery packaging material 10. The adhesive agent layer 2 is a layer provided if necessary for the purpose of, for example, enhancing adhesion between the base material layer 1 and the barrier layer 3. The adhesive layer 5 is a layer provided if necessary for the purpose of, for example, enhancing adhesion between the barrier layer 3 and the heat-sealable resin layer 4. If necessary, a surface coating layer (not shown) or the like may be provided outside the base material layer 1 (on a side opposite to the heat-sealable resin layer 4).

In the battery packaging material 10, the base material layer 1 is an outermost layer, and the heat-sealable resin layer 4 is an innermost layer. During construction of a battery, the heat-sealable resin layer 4 situated on the peripheral edge of a battery element is brought into contact with itself, and heat-welded to hermetically seal the battery element, so that the battery element is encapsulated.

The thickness of the laminate forming the battery packaging material 10 is not particularly limited, and is, for example, 180 $\mu$m, preferably 150 $\mu$m or less, more preferably about 60 to 180 $\mu$m, still more preferably about 60 and 150 $\mu$m or less, from the viewpoint of obtaining a battery packaging material excellent in moldability while reducing the thickness of the battery packaging material to enhance the energy density of the battery.

[Base material layer 1]

The base material layer 1 may include at least the PET film 11 of the present invention, and may include other layers as long as the effects of the present invention are exhibited. The base material layer 1 may be only composed of the PET film 11 of the present invention as shown in, for example, Fig. 2, or may include, in addition to the PET film 11 of the present invention, a polyamide film 13, and another layer such as an adhesive agent layer 12 for enhancing adhesion between the polyamide film 13 and the PET film 11 as shown in, for example, Fig. 3.

A plurality of PET films 11 of the present invention may be laminated, or in addition to the PET film 11 of the present invention, a PET film having a heat of fusion difference $\Delta H_{1\text{-}2}$ of less than 6 J/g may be laminated on the base material layer 1 of the battery packaging material 10.

The materials of other layers that can be included in the base material layer 1 is not particularly limited as long as they have insulation quality, and examples thereof include polyester (except for polyethylene terephthalate having heat of fusion difference $\Delta H_{1\text{-}2}$ of 6 J/g, polyamide, epoxy resins, acrylic resins, fluororesins, polyurethane, silicone resins, phenol resins, polycarbonate resins, polyetherimide, polyimide, and mixtures and copolymers thereof.

Specific examples of the polyester include polyethylene terephthalate, polyethylene naphthalate, polybutylene naphthalate, polyethylene isophthalate, and copolyester with ethylene terephthalate as a main repeating unit, each of which has a heat of fusion difference $\Delta H_{1\text{-}2}$ of less than 6 J/g. Specific examples of the copolymerization polyester including ethylene terephthalate as a main repeating unit include copolyesters that are polymerized with ethylene isophthalate and include ethylene terephthalate as a main repeating unit (hereinafter, abbreviated as follows after polyethylene(terephthalate/isophthalate)), polyethylene(terephthalate/isophthalate), polyethylene(terephthalate/adipate), polyethylene(terephthalate/sodium sulfoisophthalate), polyethylene(terephthalate/sodium isophthalate), polyethylene(terephthalate/phenyl-dicarboxylate) and polyethylene(terephthalate/decane dicarboxylate). Examples of other copolyester with a butylene terephthalate as a main repeating unit include polybutylene naphthalate. These polyesters may be used alone, or may be used in combination of two or more thereof. A polyester has the advantage that it is excellent in electrolytic solution resistance, so that whitening etc. due to contact of an electrolytic solution is hard to occur, and thus the polyester is suitably used as a material for formation of the base material layer 1.

Specific examples of the polyamide resin include aliphatic polyamides such as nylon 6, nylon 66, nylon 610, nylon 12, nylon 46, and copolymers of nylon 6 and nylon 66; hexamethylenediamine-isophthalic acid-terephthalic acid copolymerization polyamides containing a structural unit derived from terephthalic acid and/or isophthalic acid, such as nylon 6I, nylon 6T, nylon 6IT and nylon 6I6T (I denotes isophthalic acid and T denotes terephthalic acid), and polyamides containing aromatics. such as polymethaxylylene adipamide (MXD6); cycloaliphatic polyamides such as polyaminomethyl cyclohexyl adipamide (PACM 6); polyamides copolymerized with a lactam component or an isocyanate component such as 4,4'-diphenylmethane-diisocyanate, and polyester amide copolymers and polyether ester amide copolymers as copolymers of a copolymerization polyamide and a polyester or a polyalkylene ether glycol; and copolymers thereof. These polyamides may be used alone, or may be used in combination of two or more thereof. A stretched polyamide film is excellent in stretchability, can prevent occurrence of whitening due to resin breakage in the base material layer 1 during molding, and is thus suitably used as a material for formation of the base material layer 1.

When the base material layer 1 is made to have a multilayer structure, the resin films may be bonded with the use of an adhesive (adhesive agent layer 12), or may be directly laminated without the use of an adhesive. Examples of the method for bonding the resin films without the use of an adhesive include methods in which the resin films are bonded in a heat-melted state, such as a co-extrusion method, a sandwich lamination method and a thermal lamination method. When the resin films are bonded with the use of an adhesive, the adhesive to be used may be a two-liquid curable adhesive, or may be a one-liquid curable adhesive. Further, the adhesion mechanism of the adhesive is not particularly limited, and may be any one of a chemical reaction type, a solvent volatilization type, a heat melting type, a heat pressing type, an electron beam curing type, an ultraviolet curing type and the like. Specific examples of the adhesive include the same adhesives as those exemplified for the adhesive agent layer 2 described later. Further, the thickness of the adhesive can be the same as that of the adhesive agent layer 2.

Specific examples of the multilayer structure of the base material layer 1 include a structure in which the PET film 11, the adhesive agent layer 12 and the polyamide film 13 are laminated in this order; a structure in which the PET film 11, the adhesive agent layer 12 and the PET film 11 are laminated in this order; a structure in which the PET film 11, the polyamide film 13 are laminated in this order; and a structure in which the PET films 11 are laminated.

Since the PET film is excellent in resistance to an electrolytic solution which may be contacted, it is preferable that the PET film is located at the outermost layer side (a side opposite to the heat-sealable resin layer) in the battery packaging material 10.

In the present invention, it is preferable that a slipping agent is applied on the surface of the base material layer 1 from the viewpoint of improving the moldability of the battery packaging material. The slipping agent is not particularly limited, and is preferably an amide-based slipping agent. Specific examples of the amide-based slipping agent include saturated fatty acid amides, unsaturated fatty acid amides, substituted amides, methylol amides, saturated fatty acid bisamides and unsaturated fatty acid bisamides. Specific examples of the saturated fatty acid amide include lauric acid amide, palmitic acid amide, stearic acid amide, behenic acid amide, and hydroxystearic acid amide. Specific examples of unsaturated fatty acid amide include oleic acid amide and erucic acid amide. Specific examples of the substituted amide include N-oleylpalmitic acid amide, N-stearyl stearic acid amide, N-stearyl oleic acid amide, N-oleyl stearic acid amide and N-stearyl erucic acid amide. Specific examples of the methylolamide include methylolstearic acid amide. Specific examples of the saturated fatty acid bisamide include methylenebisstearic acid amide, ethylenebiscapric acid amide, ethylenebislauric acid amide, ethylenebisstearic acid amide, ethylenebishydroxystearic acid amide, ethylenebisbehenic acid amide, hexamethylenebisstearic acid amide, hexamethylenehydroxystearic acid amide, N,N'-distearyl adipic acid amide and N,N'-distearyl sebacic acid amide. Specific examples of the unsaturated fatty acid bisamide include ethylenebisoleic acid amide, ethylenebiserucic acid amide, hexamethylenebisoleic acid amide, N,N'-dioleyladipic acid amide and N,N'-dioleylsebacic acid amide. Specific examples of the fatty acid ester amide include stearoamideethyl stearate. Specific examples of the aromatic bisamide include m-xylylenebisstearic acid amide, m-xylylenebishydroxystearic acid amide and N,N'-distearylisophthalic acid amide. The slipping agents may be used alone, or may be used in combination of two or more thereof.

The content of the slipping agent in the base material layer 1 is not particularly limited, and is preferably about 0.01 to 0.2% by mass, more preferably about 0.05 to 0.15% by mass for improving the moldability and insulation quality of the battery packaging material.

The thickness of the base material layer 1 is, for example, 5 $\mu$m or more, preferably about 5 to 50 $\mu$m, more preferably about 10 to 50 $\mu$m, still more preferably about 15 to 30 $\mu$m.

In the battery packaging material, whether or not the polyethylene terephthalate of the present invention is used for the base material layer 1 can be determined by measuring the heat of fusion difference $\Delta H_{1-2}$, the gradient ratio $S_{TD/MD}$, the thickness and the like of a single polyethylene terephthalate film peeled from the laminate.

In the battery packaging material, the MD direction and the TD direction of the polyethylene terephthalate film laminated on the laminate can be determined from, for example, the later-described barrier layer as described above.

[Adhesive agent layer 2]

The adhesive agent layer 2 is a layer provided between the base material layer 1 and the barrier layer 3 if necessary for strongly bonding these layers to each other.

The adhesive agent layer 2 is formed from an adhesive capable of bonding the base material layer 1 and the barrier layer 3. The adhesive used for forming the adhesive agent layer 2 may be a two-liquid curable adhesive, or may be a one-liquid curable adhesive. Further, the adhesion mechanism of the adhesive used for forming the adhesive agent layer 2 is not particularly limited, and may be any one of a chemical reaction type, a solvent volatilization type, a heat melting type, a heat pressing type and so on.

Specific examples of the adhesive component that can be used for forming the adhesive agent layer 2 include polyester-based resins such as polyethylene terephthalate, polybutylene terephthalate, polyethylene naphthalate, polybutylene naphthalate, polyethylene isophthalate and a copolyester; polyether-based adhesive agents; polyurethane-based adhesive agents; epoxy-based resins; phenol resin-based resins; polyamide-based resins such as nylon 6, nylon 66, nylon 12 and a copolymerized polyamide; polyolefin-based resins such as a polyolefin, a carboxylic acid-modified polyolefin and a metal-modified polyolefin, and a polyvinyl acetate-based resin; cellulose-based adhesive agents; (meth)acryl-based resins; polyimide-based resins; polycarbonate; amino resins such as a urea resin and a melamine resin; rubbers such as chloroprene rubber, nitrile rubber and styrene-butadiene rubber; and silicone-based resins. These adhesive components may be used alone, or may be used in combination of two or more thereof. Among these adhesive components, polyurethane-based adhesives are preferred.

While the thickness of the adhesive agent layer 2 is not particularly limited as long as a function as an adhesive layer is performed, the thickness of the adhesive agent layer 2 is, for example, about 0.1 to 10 $\mu$m, preferably about 0.5 to 5 $\mu$m.

[Barrier layer 3]

In the battery packaging material, the barrier layer 3 is a layer which is intended to improve the strength of the battery packaging material and which has a function of preventing ingress of water vapor, oxygen, light and the like into the battery. The barrier layer 3 is preferably a metal layer, i.e. a layer formed of a metal. Specific examples of the metal forming the barrier layer 3 include aluminum, stainless and titanium, with aluminum being preferred. The barrier layer 3 can be formed from, for example, a metal foil, a metal vapor-deposited film, an inorganic oxide vapor-deposited film, a carbon-containing inorganic oxide vapor-deposited film, a film provided with any of these vapor-deposited films, or the like, and is formed preferably from a metal foil, more preferably from an aluminum foil or a stainless steel foil.

When the barrier layer 3 is formed of aluminum foil, the aluminum foil is formed of an aluminum alloy. From the viewpoint of preventing generation of wrinkles and pinholes in the barrier layer 3 during manufacturing of the battery packaging material, it is more preferred to form the barrier layer from a soft aluminum foil such as annealed aluminum (JIS H4160: 1994 A8021H-O, JIS H4160: 1994 A8079H-O, JIS H4000:2014 A8021P-O, JIS H4000:2014 A8079P-O).

When the barrier layer 3 is formed of a stainless steel foil, it is preferable that the stainless steel foil is formed of austenite-based stainless steel. Accordingly, a battery packaging material having high piercing strength and excellent electrolytic solution resistance and moldability is obtained. Specific examples of the austenite-based stainless steel include SUS 304 stainless steel, SUS 301 stainless steel and SUS 316L stainless steel, and among them, SUS 304 stainless steel is especially preferable. Particularly, when the stainless steel foil is subjected to a cold rolling treatment, its extensibility is improved, leading to improvement of moldability. Further, when the stainless steel foil is heat-treated to be annealed after being subjected to cold rolling, the balance of a machine direction and a traverse direction is improved, leading to improvement of moldability. It is important to carry out a surface cleaning step after the rolling treatment or heat treatment for stabilizing the effect of a chemical conversion treatment as described later. Examples of the cleaning method include washing with an alkali or acid, and alkali electrolytic degreasing cleaning. It is also possible to perform an ultrasonic treatment, a plasma treatment or the like concurrently with the above-mentioned cleaning method. Alkali degreasing cleaning or alkali electrolytic degreasing is preferable. Accordingly, wettability of the surface is improved, so that the chemical conversion treatment can be uniformly performed, leading to stabilization of content resistance property.

Preferably, at least one surface, preferably both surfaces, of the barrier layer 3 are subjected to a chemical conversion treatment for stabilization of bonding, prevention of dissolution and corrosion, and so on. Here, the chemical conversion treatment is a treatment for forming an acid resistance film on the surface of the barrier layer. Examples of the chemical conversion treatment include chromic acid chromate treatments using a chromic compound such as chromium nitrate, chromium fluoride, chromium sulfate, chromium acetate, chromium oxalate, chromium biphosphate, acetylacetate chromate, chromium chloride or chromium potassium sulfate; phosphoric acid treatments using a phosphoric acid compound such as sodium phosphate, potassium phosphate, ammonium phosphate or polyphosphoric acid; and chromate treatments using an aminated phenol polymer.

While the thickness of the barrier layer 3 is not particularly limited as long as a function as a barrier layer to water vapor is performed, it may be, for example, about 10 to 50 $\mu$m, preferably about 10 to 45 $\mu$m.

[Heat-sealable resin layer 4]

The heat-sealable resin layer 4 corresponds to the innermost layer, and during construction of a battery, the heat-sealable resin layer is heat-welded to itself to hermetically seal the battery element.

The resin component to be used in the heat-sealable resin layer 4 is not particularly limited as long as it can be heat-welded, and examples thereof include polyolefins, cyclic polyolefins, acid-modified polyolefins and acid-modified cyclic polyolefins. That is, the resin forming the heat-sealable resin layer 4 may optionally contain a polyolefin backbone. Preferably, such a resin contains a polyolefin backbone. The resin forming the heat-sealable resin layer 4 can be confirmed to contain a polyolefin backbone by an analysis method such as infrared spectroscopy or gas chromatography mass spectrometry, and the analysis method is not particularly limited. For example, when a maleic anhydride-modified polyolefin is measured by infrared spectroscopy, peaks derived from maleic anhydride are detected near wave numbers of 1760 cm$^{-1}$ and 1780 cm$^{-1}$. However, if the degree of acid modification is low, the peaks may be too small to be detected. In that case, the peaks can be analyzed by nuclear magnetic resonance spectroscopy.

Specific examples of the polyolefin include polyethylene such as low-density polyethylene, medium-density polyethylene, high-density polyethylene and linear low-density polyethylene; polypropylene such as homopolypropylene, block copolymers of polypropylene (e.g. block copolymers of propylene and ethylene) and random copolymers of polypropylene (e.g. random copolymers of propylene and ethylene); and terpolymers of ethylene-butene-propylene. Among these polyolefins, polyethylene and polypropylene are preferred.

The cyclic polyolefin is a copolymer of an olefin and a cyclic monomer, and examples of the olefin as a constituent monomer of the cyclic polyolefin include ethylene, propylene, 4-methyl-1-pentene, butadiene and isoprene. Examples of the cyclic monomer as a constituent monomer of the cyclic polyolefin include cyclic alkenes such as norbornene, specifically cyclic dienes such as cyclopentadiene, dicyclopentadiene, cyclohexadiene and norbornadiene. Among these polyolefins, cyclic alkenes are preferred, and norbornene is further preferred.

The acid-modified polyolefin is a polymer with the polyolefin modified by subjecting the polyolefin to block polymerization or graft polymerization with an acid component such as carboxylic acid. Examples of the acid component to be used for modification include carboxylic acids such as maleic acid, acrylic acid, itaconic acid, crotonic acid, maleic anhydride and itaconic anhydride, and anhydrides thereof.

The acid-modified cyclic polyolefin is a polymer obtained by performing copolymerization with an α,β-unsaturated carboxylic acid or an anhydride thereof replacing a part of monomers that form the cyclic polyolefin, or by block-polymerizing or graft-polymerizing an α,β-unsaturated carboxylic acid or an anhydride thereof with the cyclic polyolefin. The cyclic polyolefin to be modified with a carboxylic acid is the same as described above. The carboxylic acid to be used for modification is the same as that used for modification of the polyolefin.

Among these resin components, polyolefins such as polypropylene, carboxylic acid-modified polyolefins are preferred, and polypropylene and carboxylic acid-modified polypropylene are further preferred.

The heat-sealable resin layer 4 may be formed from one resin component alone, or may be formed from a blend polymer obtained by combining two or more resin components. Further, the heat-sealable resin layer 4 may be formed of only one layer, but may be formed of two or more layers with the same resin component or different resin components.

The heat-sealable resin layer 4 may contain a slipping agent etc. if necessary. When the heat-sealable resin layer 4 contains a slipping agent, moldability of the battery packaging material can be improved. The slipping agent is not particularly limited, a known slipping agent may be used, and examples thereof include those shown above as an example for the base material layer 1. The slipping agents may be used alone, or may be used in combination of two or more thereof. The content of the slipping agent in the heat-sealable resin layer 4 is not particularly limited, and is preferably about 0.01 to 0.20% by mass, more preferably about 0.05 to 0.15% by mass for improving the moldability and insulation quality of the battery packaging material.

While the thickness of the heat-sealable resin layer 4 is not particularly limited as long as a function as a heat-sealable resin layer is performed, it is preferably 60 μm or less, more preferably about 10 to 40 μm.

[Adhesive layer 5]

The adhesive layer 5 is a layer provided between the barrier layer 3 and the heat-sealable resin layer 4 if necessary for strongly bonding these layers to each other.

The adhesive layer 5 is formed from a resin capable of bonding the barrier layer 3 and the heat-sealable resin layer 4 to each other. The bonding mechanism and the type of adhesive component of the resin to be used for forming the adhesive layer 5 are the same as in the case of the adhesive exemplified for the adhesive agent layer 2. As the resin to be used for forming the adhesive layer 5, polyolefm-based resins such polyolefins, cyclic polyolefins, carboxylic acid-modified polyolefins and carboxylic acid-modified cyclic polyolefins as exemplified for the heat-sealable resin layer 4 can be used. From the viewpoint of excellent adhesion between the barrier layer 3 and the heat-sealable resin layer 4, the polyolefin is preferably a carboxylic acid-modified polyolefin, and especially preferably carboxylic acid-modified polypropylene. That is, the resin forming the adhesive layer 5 may optionally contain a polyolefin backbone. Preferably, such a resin contains a polyolefin backbone. The resin forming the adhesive layer 5 can be confirmed to contain a polyolefin backbone by an analysis method such as infrared spectroscopy or gas chromatography mass spectrometry, and the analysis method is not particularly limited. For example, when a maleic anhydride-modified polyolefin is measured by infrared spectroscopy, peaks derived from maleic anhydride are detected near wave numbers of 1760 cm$^{-1}$ and 1780 cm$^{-1}$. However, if the degree of acid modification is low, the peaks may be too small to be detected. In that case, the peaks can be analyzed by nuclear magnetic resonance spectroscopy.

Further, from the viewpoint of obtaining a battery packaging material excellent in shape stability after molding while having a small thickness, the adhesive layer 5 may be cured product of a resin composition containing an acid-modified polyolefin and a curing agent. Preferred examples of the acid-modified polyolefin include acid-modified polyolefins identical to the carboxylic acid-modified polyolefins or the carboxylic acid-modified cyclic polyolefins exemplified for the heat-sealable resin layer 4.

The curing agent is not particularly limited as long as it cures the acid-modified polyolefin. Examples of the curing agent include epoxy-based curing agents, polyfunctional isocyanate-based curing agents, carbodiimide-based curing agents and oxazoline-based curing agents.

The epoxy-based curing agent is not particularly limited as long as it is a compound having at least one epoxy group. Examples of the epoxy-based curing agent include epoxy resins such as bisphenol A diglycidyl ether, modified bisphenol A diglycidyl ether, novolak glycidyl ether, glycerin polyglycidyl ether and polyglycerin polyglycidyl ether.

The polyfunctional isocyanate-based curing agent is not particularly limited as long as it is a compound having two or more isocyanate groups. Specific examples of the polyfunctional isocyanate-based curing agent include isophorone diisocyanate (IPDI), hexamethylene diisocyanate (HDI), tolylene diisocyanate (TDI), diphenylmethane diisocyanate (MDI), polymerized or nurated products thereof, mixtures thereof, and copolymers of these compounds with other polymers.

The carbodiimide-based curing agent is not particularly limited as long as it is a compound having at least one carbodiimide group (-N=C=N-). The carbodiimide-based curing agent is preferably a polycarbodiimide compound having at least two carbodiimide groups.

The oxazoline-based curing agent is not particularly limited as long as it is a compound having an oxazoline backbone. Specific examples of the oxazoline-based curing agent include EPOCROS Series from Nippon Shokubai Co., Ltd.

The curing agent may be formed of two or more compounds from the viewpoint of, for example, improving adhesion between the barrier layer 3 and the heat-sealable resin layer 4 by the adhesive layer 5.

The content of the curing agent in the resin composition forming the adhesive layer 5 is preferably in the range of about 0.1 to 50 mass%, more preferably in the range of about 0.1 to 30 mass%, still more preferably in the range of about 0.1 to 10 mass%.

While the thickness of the adhesive layer 5 is not particularly limited as long as a function as an adhesive layer is performed, the thickness of the adhesive layer 5 is preferably about 1 to 10 $\mu$m, more preferably about 1 to 5 $\mu$m when any of the adhesives exemplified for the adhesive agent layer 2 is used. When any of the resins exemplified for the heat-sealable resin layer 4 is used, the thickness of the adhesive layer is preferably about 2 to 50 $\mu$m, more preferably about 10 to 40 $\mu$m. When a cured product of an acid-modified polyolefin and a curing agent, the thickness of the adhesive layer is preferably about 30 $\mu$m or less, more preferably about 0.1 to 20 $\mu$m, still more preferably about 0.5 to 5 $\mu$m. When the adhesive layer 5 is a cured product of a resin composition containing an acid-modified polyolefin and a curing agent, the adhesive layer 5 can be formed by applying the resin composition and curing the resin composition by heating or the like.

[Surface coating layer]

In the battery packaging material of the present invention, a surface coating layer may be provided on the base material layer 1 (on the base material layer 1 on a side opposite to the barrier layer 3) if necessary for the purpose of, for example, improving designability, electrolytic solution resistance, scratch resistance and moldability. The surface coating layer is a layer that is situated at an outermost layer when a battery is assembled.

The surface coating layer can be formed from a resin composition. Examples of the components contained in the resin composition include resin components, curing accelerators and additives (such as a filler) as described below.

Preferably, the resin component contained in the resin composition contains a thermosetting resin. The thermosetting resin may be one that is polymerized by heating to form a polymer network structure, resulting in curing of the resin. Specific examples of the thermosetting resin include polyvinylidene chloride, polyester resins, epoxy resins, amino resins (e.g. melamine resins and benzoguanamine resins), acrylic resins, urethane resins, phenol resins, unsaturated polyester resins and alkyd resins.

Among these thermosetting resins, urethane resins and epoxy resins are preferred, two-liquid curable urethane resins and two-liquid curable epoxy resins are more preferred, and two-liquid curable epoxy resins are especially preferred, from the viewpoint of, for example, shortening the curing time, and improving moldability and chemical resistance.

Specific examples of the two-liquid curable urethane resin include combinations of a polyol compound (main component) and an isocyanate compound (curing agent), and specific examples of the two-liquid curable epoxy resin include combinations of an epoxy resin (main component) and an acid anhydride, an amine component or an amino resin (curing agent). The two-liquid curable urethane resin is preferably polyfunctional urethane (meth)acrylate composed of a combination of polyfunctional (meth)acrylate (main agent) containing active hydrogen and polyisocyanate (curing agent).

In the two-liquid curable urethane resin, the polyol compound to be used as the main component is not particularly limited, and examples thereof include polyester polyol, polyester polyurethane polyol, polyether polyol and polyether polyurethane polyol. These polyol compounds may be used alone, or may be used in combination of two or more thereof.

In the two-liquid curable urethane resin, the isocyanate-based compound to be used as a curing agent is not particularly limited, and examples thereof include polyisocyanate, adducts thereof, isocyanurate-modified products thereof, carbodiimide-modified products thereof, allophanate-modified products thereof, and burette-modified products thereof. Specific examples of the polyisocyanate include aromatic diisocyanates such as diphenylmethane diisocyanate (MDI), polyphenylmethane diisocyanate (polymeric MDI), tolylene diisocyanate (TDI), hexamethylene diisocyanate (HDI), bis(4-isocyanatecyclohexyl)methane (H12MDI), isophorone diisocyanate (IPDI), 1,5-naphthalene diisocyanate (1,5-NDI), 3,3'-dimethyl-4,4'-diphenylene diisocyanate (TODI) and xylene diisocyanate (XDI); aliphatic diisocyanates such as tramethylene diisocyanate, hexamethylene diisocyanate, trimethylhexamethylene diisocyanate and isophorone diisocyanate;

cycloaliphatic diisocyanates such as 4,4'-methylenebis(cyclohexyl isocyanate) and isophorone diisocyanate; and polycyclic aromatic diisocyanates such as 1,5-naphthalene diisocyanate (1,5-NDI). Specific examples of the adduct include adducts with trimethylolpropane, glycol or the like added to the above-described polyisocyanates. These isocyanate-based compounds may be used alone, or may be used in combination of two or more thereof.

These thermosetting resins may be crosslinkable elastomers. The crosslinkable elastomer is a thermosetting resin capable of adding a soft segment to a cured product. For example, when the curable elastomer is a two-liquid curable urethane resin or a two-liquid curable epoxy resin, the above-described main component may have a structure which enables addition of a soft segment. The crosslinkable elastomer can be used as a part of the thermosetting resin for forming a layer forming a surface coating layer in order to impart desired hardness to the layer forming the surface coating layer.

These thermosetting resins may be used alone, or may be used in combination of two or more thereof. The surface coating layer may have a plurality of layers. When the surface coating layer has a plurality of layers, thermosetting resins used in the layers may be the same or different, and the type of thermosetting resin may be appropriately selected according to functions and physical properties to be imparted to the layers. For example, for the layer forming an outermost layer (outermost layer located on a position opposite to the base material layer 1 side), among the layers forming the surface coating layer, a thermosetting resin having a polyaromatic backbone and/or a heterocyclic backbone are suitably used from the viewpoint of securing excellent chemical resistance. Specific examples of the thermosetting resin having a polyaromatic backbone include epoxy resins having a polyaromatic backbone and urethane resins having a polyaromatic backbone. Specific examples of the thermosetting resin having a heterocyclic backbone include amino resins such as melamine resins and benzoguanamine resins. The thermosetting resin having such a polyaromatic backbone and/or heterocyclic backbone may be of one-liquid curing type or two-liquid curing type.

More specific examples of the epoxy resin having a polyaromatic backbone include reaction products of dihydroxynaphthalene with epihalohydrin; reaction products of a condensation product of naphthol and an aldehyde (naphthol novolac resin) with epihalohydrin; reaction products of dihydroxy naphthalene and aldehydes with epihalohydrin; reaction products of a condensation product of mono or dihydroxynaphthalene and xylylene glycol with epihalohydrin; reaction products of an adduct of mono or dihydroxynaphthalene and a diene compound with epihalohydrin; and reaction products of epihalohydrin with a polynaphthol obtained by direct coupling of naphthols.

More specific examples of the urethane resin having a polyaromatic backbone include a reaction products of a polyol compound with an isocyanate-based compound having a polycyclic aromatic backbone.

(Curing accelerator)

The resin composition forming the surface coating layer may contain a curing accelerator in addition to the above-described resin component. When a curing accelerator coexists with the thermosetting resin, a layer having a specific hardness can be formed by curing the surface coating layer in a short time without necessity of aging under a high-temperature condition during manufacturing.

Here, the "curing accelerator" is a substance that does not form a crosslinked structure by itself, but is a substance which accelerates crosslinking reaction of the thermosetting resin. The curing accelerator is a substance which has a function of accelerating crosslinking reaction of a thermosetting resin, and may itself form a crosslinked structure.

The type of the curing accelerator is appropriately selected according to the thermosetting resin used so that the aforementioned hardness can be attained. Examples thereof include amidine compounds, carbodiimide compounds, ketimine compounds, hydrazine compounds, sulfonium salts, benzothiazolium salts and tertiary amine compounds.

The amidine compound is not particularly limited, and examples thereof include imidazole compounds, 1,8-diazabicyclo[5.4.0]undec-7-ene (DBU), 1,5-diazabicyclo[4.3.0]non-5-ene (DBN) and guanidine compounds. Specific examples of the imidazole compound include 2-methylimidazole, 2-ethylimidazole, 2-undecylimidazole, 2,4-dimethylimidazole, 2-heptadecylimidazole, 1,2-dimethylimidazole, 1,2-diethylimidazole, 2-ethyl-4-methylimidazole, 2-phenylimidazole, 1-benzyl-2-phenylimidazole, 1-cyanoethyl-2-methylimidazole, 1-cyanoethyl-2-undecylimidazole, 1-benzyl-2-methylimidazole, 2,4-diamino-6-[2'-methylimidazolyl-(1)']-ethyl-S-triazine, 2,4-diamino-6-[2'-ethyl-4'-methylimidazolyl-(1)']-ethyl-S-triazine, 2,4-diamino-6-[2'-undecylimidazolyl]-ethyl-S-triazine, 2,4-diamino-6-[2'-methylimidazolyl-(1)']-ethyl-S-triazine isocyanuric oxidation adduct, 2-phenyl-4-methyl-5-hydroxymethylimidazole, 2-phenyl-4,5-dihydroxymethylimidazole and 2-aryl-4,5-diphenylimidazole. These amidine compounds may be used alone, or may be used in combination of two or more thereof.

The carbodiimide compound is not particularly limited, and examples thereof include N,N'-dicyclohexylcarbodiimide, N,N'-diisopropylcarbodiimide, 1-ethyl-3-(3-dimethylaminopropyl)carbodiimide, N-[3-(dimethylamino)propyl]-N'-ethylcarbodiimide, N-[3-(dimethylamino)propyl]-N'-ethylcarbodiimide methiodide, N-tert-butyl-N'-ethylcarbodiimide, N-cyclohexyl-N'-(2-morpholinoethyl)carbodiimide meso-p-toluenesulfonate, N,N'-di-tert-butylcarbodiimide and N,N'-di-p-tolylcarbodiimide. These carbodiimide compounds may be used alone, or may be used in combination of two or more thereof.

The ketimine compound is not particularly limited as long as it has a ketimine bond (N = C), and examples thereof include ketimine compounds obtained by reacting a ketone with an amine. Specific examples of the ketone include methyl ethyl ketone, methyl isopropyl ketone, methyl tert-butyl ketone, methyl cyclohexyl ketone, diethyl ketone, ethyl propyl ketone, ethyl butyl ketone, dipropyl ketone, dibutyl ketone and diisobutyl ketone. Specific examples of the amine include aromatic polyamines such as o-phenylenediamine, m-phenylenediamine, p-phenylenediamine, m-xylylenediamine, diaminodiphenylmethane, diaminodiphenylsulfone and diaminodiethyldiphenylmethane; aliphatic polyamines such as ethylenediamine, propylenediamine, butylenediamine, diethylenetriamine, triethylenetetramine, tetraethylenepentamine, pentaethylenehexamine, hexamethylenediamine, trimethylhexamethylenediamine, 1,2-propanediamine, iminobispropylamine and methyliminobispropylamine; monoamines having an ether bond on the main chain, such as N-aminoethylpiperazine and 3-butoxyisopropylamine, and diamines having a polyether backbone; cycloaliphatic polyamines such as isophoronediamine, 1,3-bisaminomethylcyclohexane, 1-cyclohexylamino-3-aminopropane and 3-aminomethyl-3,3,5-trimethylcyclohexylamine: diamines having a norbornane backbone; polyamideamines having an amino group at the molecular end of polyamide; 2,5-dimethyl-2,5-hexamethylenediamine, mensendiamine and 1,4-bis(2-amino-2-methylpropyl)piperazine. These ketimine compounds may be used alone, or may be used in combination of two or more thereof.

The hydrazine compound is not particularly limited, and examples thereof include dipic acid dihydrazide and isophthalic acid dihydrazide. These hydrazine compounds may be used alone, or may be used in combination of two or more thereof.

The sulfonium salt is not particularly limited, and examples thereof include alkylsulfonium salts such as 4-acetophenyldimethylsulfonium hexafluoroantimonate, 4-acetophenyldimethylsulfonium hexafluoroarsenate, dimethyl-4-(benzyloxycarbonyloxy)phenylsulfonium hexafluoroantimonate, dimethyl-4-(benzoyloxy)phenylsulfonium hexafluoroantimonate and dimethyl-4-(benzoyloxy)phenylsulfonium hexafluoroarsenate; benzylsulfonium salts such as benzyl-4-hydroxyphenylmethylsulfonium hexafluoroantimonate, 4-acetoxyphenylbenzylmethylsulfonium hexafluoroantimonate, benzyl-4-methoxyphenylmethylsulfonium hexafluoroantimonate, benzyl-3 -chloro-4-hydroxyphenylmethylsulfonium hexafluoroarsenate and 4-methoxybenzyl-4-hydroxyphenylmethylsulfonium hexafluorophosphate; dibenzylsulfonium salts such as dibenzyl-4-hydroxyphenylsulfonium hexafluoroantimonate, dibenzyl-4-hydroxyphenylsulfonium hexafluorophosphate, dibenzyl-4-methoxyphenylsulfonium hexafluoroantimonate and benzyl-4-methoxybenzyl-4-hydroxyphenylsulfonium hexafluorophosphate; and substituted benzylsulfonium salts such as p-chlorobenzyl-4-hydroxyphenylmethylsulfonium hexafluoroantimonate, p-nitrobenzyl-4-hydroxyphenylmethylsulfonium hexafluoroantimonate, 3,5 -dichlorobenzyl-4-hydroxyphenylmethylsulfonium hexafluoroantimonate and o-chlorobenzyl-3-chloro-4-hydroxyphenylmethylsulfonium hexafluoroantimonate. These sulfonium salts may be used alone, or may be used in combination of two or more thereof.

The benzothiazolium salt is not particularly limited, and examples thereof include benzylbenzothiazolium salts such as 3-benzylbenzothiazolium hexafluoroantimonate, 3-benzylbenzothiazolium hexafluorophosphate, 3-benzylbenzothiazolium tetrafluoroborate, 3 -(p-methoxybenzyl)benzothiazolium hexafluoroantimonate, 3 -benzyl-2-methylthiobenzothiazolium hexafluoroantimonate and 3-benzyl-5-chlorobenzothiazolium hexafluoroantimonate. These benzothiazolium salts may be used alone, or may be used in combination of two or more thereof.

The tertiary amine compound is not particularly limited, and examples thereof include aliphatic tertiary amines such trimethylamine, triethylamine, tripropylamine, tributylamine, triethylenediamine, 1,4-diazabicyclo[2.2.2]octane, quinuclidine and 3-quinuclidinol; aromatic tertiary amines such as dimethylaniline; heterocyclic tertiary amines such as isoquinoline, pyridine, collidine and beta-picoline. These tertiary amine compounds may be used alone, or may be used in combination of two or more thereof.

A preferred example of the curing accelerator is one that functions as a thermal acid generator. The thermal acid generator is a substance that generates an acid when heated, and functions as a curing accelerator. Specific examples of curing accelerators which can function as thermal acid generators, among the curing accelerators described above, include sulfonium salts and benzothiazolium salts.

Another preferred example of the curing accelerator is one having thermal potentiality of being activated under a predetermined heating condition (e.g. 80 to 200°C, preferably 100 to 160°C) to accelerate crosslinking reaction of a thermosetting resin. Specific examples of substances having thermal potentiality, among the curing accelerators described above, include epoxy adducts with an epoxy compound added to an amidine compound, a hydrazine compound, a tertiary amine compound or the like.

Further, another preferred example of the curing accelerator is one having hydrolytic potentiality of not functioning as a curing agent in a closed state, i.e. a moisture blocking state, but functioning as a curing agent by undergoing hydrolysis when the closed state is cancelled so that moisture is present. Specific examples of substances having hydrolytic potentiality, among the curing accelerators described above, include epoxy adducts with an epoxy compound added to an amidine compound, a hydrazine compound, a tertiary amine compound or the like.

These curing accelerators may be used alone, or may be used in combination of two or more thereof. Among these curing accelerators, amidine compounds and sulfonium salts are preferable, and amidine compounds are more preferable.

These curing accelerators may be used alone, or may be used in combination of two or more thereof, in the surface coating layer. When the surface coating layer has a plurality of layers, curing accelerators used in the layers forming the surface coating layer may be the same or different, and the type of curing accelerator may be appropriately selected according to functions and physical properties to be imparted to the layers.

When a curing accelerator is used, the content of the curing accelerator in the resin composition used for forming the surface coating layer is appropriately set according to the type of thermosetting resin used, the type of curing accelerator and the like, and for example, the total amount of the curing accelerator is about 0.01 to 6 parts by mass, preferably about 0.05 to 5 parts by mass, more preferably about 0.1 to 2 parts by mass based on 100 parts by mass of the thermosetting resin.

Preferably, the surface coating layer contains a filler as an additive. That is, it is preferable that the surface coating layer is formed from a resin composition containing a filler. When the surface coating layer contains a filler, an irregularity shape can be formed on the surface of the surface coating layer, so that a matte feeling can be imparted to the battery packaging material. Specific examples of the filler include inorganic fillers such as titanium oxide, silica, talc, clay, heavy calcium carbonate, light calcium carbonate, barium sulfate, calcium silicate, synthetic silicate, aluminum hydroxide and silicic acid fine powder. The fillers may be used alone, or may be used in combination of two or more thereof.

The inorganic filler is preferably an inorganic filler obtained using silica or sedimentable barium sulfate as a material because it is easily handled and easily acquired. The sedimentable barium sulfate refers to barium sulfate manufactured with the aid of chemical reaction, and is characterized in that the particle size can be controlled.

The content of the filler in the surface coating layer is preferably about 2.0 to 8.7% by mass when for example, the filler is silica having an average particle size of about 1.0 to 3.0 $\mu$m. The content of the filler in the surface coating layer is preferably about 13.0 to 40.0% by mass when for example, the filler is sedimentable barium sulfate having an average particle size of less than 1.5 $\mu$m. The content of the filler is the content of the filler in the surface coating layer, and the content is a content after the solvent is volatilized from the resin composition for forming the surface coating layer containing the filler. The average particle size of the filler is a median diameter measured by a laser diffraction/scattering particle size distribution measuring apparatus.

The surface coating layer may contain at least one of a pigment and a dye as an additive. When the surface coating layer contains at least one of a pigment and a dye, it is possible to more effectively suppress whitening during molding, and improve abrasion resistance. When the surface coating layer contains at least one of a pigment and a dye, discriminability can be imparted to the battery packaging material of the present invention (the battery packaging material can be colored with at least one of a pigment and a dye), so that a matting design can be imparted to the surface of the battery packaging material of the present invention, and the thermal conductivity of the battery packaging material of the present invention can be enhanced to improve the heat dissipation property.

The material of the pigment is not particularly limited, and may be either an inorganic pigment or an organic pigment. Specific examples of the inorganic pigment include carbon black, carbon nanotubes, graphite, kaolin, magnesium hydroxide, zinc oxide, magnesium oxide, aluminum oxide, neodymium oxide, antimony oxide, cerium oxide, calcium sulfate, lithium carbonate, gold, aluminum, copper and nickel. Specific examples of the organic pigment include azo pigments, polycyclic pigments, lake pigments and fluorescent pigments. These pigments may be used alone, or may be used in combination of two or more thereof.

The shape of the pigment is not particularly limited, and examples thereof include a spherical shape, a fibrous shape, a plate shape, an amorphous shape and a balloon shape. The average particle size of the pigment is not particularly limited, and is, for example, preferably about 0.01 to 3 $\mu$m, more preferably about 0.05 to 1 $\mu$m. The average particle size of the pigment is a median diameter measured by a laser diffraction/scattering particle size distribution measuring apparatus.

The surface of the pigment may be subjected to various kinds of surface treatments such as an insulation treatment and a dispersibility enhancing treatment (resin coating treatment) if necessary.

The type of dye is not particularly limited as long as it can be dissolved or dispersed in the resin composition used for forming the surface coating layer, and examples thereof include nitro dyes, azo-based dyes, stilbene dyes, carponium dyes, quinoline dyes, methine dyes, thiazole dyes, quinimine dyes, anthraquinone dyes, indigoid dyes and phthalocyanine dyes, with azo dyes, carponium dyes and anthraquinone dyes being preferred. These dyes may be used alone, or may be used in combination of two or more thereof.

Among these pigments and dyes, pigments are preferred, inorganic pigments are more preferred, inorganic pigments, carbon materials such as carbon black, carbon nanotubes and graphite are still more preferred, and carbon black is especially preferred, from the viewpoint of further improving the heat dissipation property of the battery packaging material of the present invention.

When the surface coating layer has a multiple layer structure of two or more layers, and contains a pigment etc., one or two or more of these layers may contain a pigment and/or a dye. From the viewpoint of reducing a difference in color tone between a molded part and an unmolded part after molding of the battery packaging material of the present invention, it is preferable that the surface coating layer has a multiple layer structure of two or more layers, and two or more layers contain a pigment and/or a dye, and it is more preferable that the surface coating layer has a three-layer structure of three layers, and all the three layers contain a pigment and/or a dye.

When at least one layer forming the surface coating layer contains a pigment and/or a dye, the content of the pigment and/or the dye may be appropriately set according to the type of pigment and/or dye used, discriminability and heat dissipation property to be imparted to the battery packaging material of the present invention, and the like, and for example, the total amount of the pigment and/or the dye is about 1 to 30 parts by mass based on 100 parts by mass of the resin component present in the layers containing the pigment and/or the dye. From the viewpoint of imparting further excellent discriminability, the total amount of the pigment and/or the dye is about 3 to 20 parts by mass based on 100 parts by mass of the resin component present in the layers containing the pigment and/or the dye. From the viewpoint of imparting further excellent discriminability and suppressing deterioration of moldability which is caused by the pigment and/or the dye, the total amount of the pigment and/or the dye is about 5 to 15 parts by mass based on 100 parts by mass of the resin component present in the layers containing the pigment and/or the dye.

If necessary, the resin composition used for forming the surface coating layer may contain, in addition to the above-described additives, other additives such as an organic filler, a slipping agent, a solvent and an elastomer resin depending on functionalities to be imparted to the surface coating layer.

When the surface coating layer contains an organic filler or a slipping agent as an additive, a slip effect can be imparted to the surface of the battery packaging material of the present invention to improve the moldability and processability in press molding and embossing, or improve operability.

The type of organic filler is not particularly limited, and examples thereof include high-melting-point nylon, crosslinked acrylics, crosslinked styrene, crosslinked polyethylene and benzoguanamine. The shape of the organic filler is not particularly limited, and examples thereof include a spherical shape, a fibrous shape, a plate shape, an amorphous shape and a balloon shape.

The slipping agent is not particularly limited, and may be, for example, a non-reactive slipping agent or a reactive slipping agent. In particular, the reactive slipping agent has an advantage that the slipping agent is hardly bled and lost from the outermost layer forming the surface coating layer, and occurrence of powdering and offset at the time of use, or time-dependent reduction of the slip effect can be suppressed. Therefore, among slipping agents, reactive slipping agents are preferred.

Here, the non-reactive slipping agent is, for example, a compound which does not have a functional group that reacts to chemically bind to the resin component and which can impart a slipping property (sliding property). The non-reactive slipping agent is a compound which has a functional group that reacts to chemically bind to the resin component and which can impart a slipping property (sliding property).

Specific examples of the non-reactive slipping agent include fatty acid amides, metal soaps, hydrophilic silicone, acrylics grafted with silicone, epoxy grafted with silicone, polyether grafted with silicone, polyester grafted with silicone, block-type silicone-acrylic copolymers, polyglycerol-modified silicone and paraffin. These non-reactive slipping agents may be used alone, or may be used in combination of two or more thereof.

In the reactive slipping agent, the type of functional group is appropriately set according to the type of resin component used, and the functional group is, for example, a hydroxyl group, a mercapto group, a hydrolyzable silyl group, an isocyanate group, an epoxy group, a polymerizable vinyl group or a (meth)acryloyl group. In the reactive slipping agent, the number of functional groups per molecule is not particularly limited, and is, for example, 1 to 3, preferably 1 or 2.

Specific examples of the reactive slipping agent include modified silicone having any of the above-described functional groups; modified fluororesins having any of the above-described functional groups; compounds in which any of the above-described functional groups is introduced to a fatty acid amide such as stearic acid amide, oleic acid amide, erucic acid amide or ethylenebisstearic acid amide; metal soaps containing any of the above-described functional groups; and paraffin containing any of the above-described functional groups. These reactive slipping agents may be used alone, or may be used in combination of two or more thereof. Among these reactive slipping agents, modified silicone having any of the above-described functional groups, modified fluororesins having any of the above-described functional groups, and silicone-modified resins having any of the above-described functional groups are preferred. Specific examples of the modified silicone include modified silicone in which a polymer having any of the above-described functional groups is block-polymerized, such as modified silicone in which an acrylic resin is block-polymerized; and modified silicone in which a monomer having any of the above-described functional groups is graft-polymerized, such as modified silicone in which an acrylate is graft-polymerized. Specific examples of the modified fluororesin include modified fluororesins in which a monomer having any of the above-described functional groups is graft-polymerized, such as fluororesins in which an acrylate is graft-polymerized; and fluororesins in which a polymer having any of the above-described functional groups is block-polymerized, such as modified fluororesins in which an acrylic resin is block-polymerized. Specific examples of the silicone-modified resin include silicone-modified resins which have any of the above-described functional groups and in which silicone is graft-polymerized, such as silicone-modified acrylic resins in which silicone is graft-polymerized with an acrylic resin having any of the above-described functional groups. Of these, especially preferred reactive slipping agents include modified silicone in which a monomer or a polymer having any of the above-described functional groups is polymerized at one end of silicone; and modified fluororesins in which a monomer or a polymer having any of the above-described functional groups is polymerized at one end of a fluororesin. As the modified silicone and modified fluororesins, for example, "MODIPER (registered trademark) F/FS series" (manufactured by NOF CORPORATION), "CYMAC (registered trademark) series" (manufactured by Toagosei Company, Limited) and the like are commercially available, and these commercially available products can be used.

When the resin composition used for forming the outermost layer in the surface coating layer contains a slipping agent, the content of the slipping agent is not particularly limited, and for example, the total amount of the slipping agent is about 1 to 12 parts by mass, preferably about 3 to 10 parts by mass, still more preferably about 5 to 8 parts by mass based on 100 parts by mass of the resin component.

Specific examples of other additives include montmorilloide, montmorillonite, synthetic mica, hydrotalcite, zeolite, calcium benzoate, calcium oxalate, magnesium stearate, gold, aluminum, copper and nickel.

The method for forming a surface coating layer is not particularly limited, and examples thereof include a method in which a resin composition for forming a surface coating layer is applied to one of the surfaces of the base material layer 1. When the additives are blended, the additives may be added to the resin composition, mixed, and then applied.

While the thickness of the surface covering layer is not particularly limited as long as the above-mentioned function as a surface coating layer is performed, it is, for example, about 0.5 to 10 $\mu$m, preferably about 1 to 5 $\mu$m.

3. Method for manufacturing battery packaging material

The method for manufacturing the battery packaging material according to the present invention is not particularly limited as long as a laminate in which layers each having a predetermined composition are laminated is obtained. That is, the battery packaging material includes at least a step of laminating a base material layer, a barrier layer and a heat-sealable resin layer in this order, and the polyethylene terephthalate film having a heat of fusion difference $\Delta H_{1-2}$ of 6 J/g can be used for the base material layer.

One example of the method for manufacturing a battery packaging material according to the present invention is as follows. First, a laminate including the base material layer 1, the adhesive agent layer 2 and the barrier layer 3 in this order (hereinafter, the laminate may be described as a "laminate A") is formed. Specifically, the laminate A can be formed by a dry lamination method in which an adhesive to be used for formation of the adhesive agent layer 2 is applied onto the base material layer 1 or the barrier layer 3, the surface of which is subjected to a chemical conversion treatment if necessary, using a coating method such as a gravure coating method or a roll coating method, and dried, the barrier layer 3 or the base material layer 1 is then laminated, and the adhesive agent layer 2 is cured.

Then, the heat-sealable resin layer 4 is laminated on the barrier layer 3 of the laminate A. When the heat-sealable resin layer 4 is laminated directly on the barrier layer 3, a resin component that forms the heat-sealable resin layer 4 may be applied onto the barrier layer 3 of the laminate A by a method such as a gravure coating method or a roll coating method. When the adhesive layer 5 is provided between the barrier layer 3 and the heat-sealable resin layer 4, mention is made of, for example, (1) a method in which the adhesive layer 5 and the heat-sealable resin layer 4 are co-extruded to be laminated on the barrier layer 3 of the laminate A (co-extrusion lamination method); (2) a method in which the adhesive layer 5 and the heat-sealable resin layer 4 are laminated to form a laminate separately, and the laminate is laminated on the barrier layer 3 of the laminate A by a thermal lamination method; (3) a method in which an adhesive for formation of the adhesive layer 5 is laminated on the barrier layer 3 of the laminate A by an extrusion method or a method in which the adhesive is applied by solution coating, dried at a high temperature and baked, and the heat-sealable resin layer 4 formed in a sheet shape beforehand is laminated on the adhesive layer 5 by a thermal lamination method; and (4) a method in which the melted adhesive layer 5 is poured between the barrier layer 3 of the laminate A and the heat-sealable resin layer 4 formed in a sheet shape beforehand, and simultaneously the laminate A and the heat-sealable resin layer 4 are bonded together with the adhesive layer 5 interposed therebetween (sandwich lamination).

When a surface coating layer is provided, the surface coating layer is laminated on a surface of the base material layer 1 on a side opposite to the barrier layer 3. The surface covering layer can be formed by, for example, coating a surface of the base material layer 1 with the resin that forms the surface coating layer. The order of the step of laminating the barrier layer 3 on a surface of the base material layer 1 and the step of laminating the surface coating layer on a surface of the base material layer 1 is not particularly limited. For example, the surface coating layer may be formed on a surface of the base material layer 1, followed by forming the barrier layer 3 on a surface of the base material layer 1 on a side opposite to the surface coating layer.

A laminate including the surface coating layer provided if necessary, the base material layer 1, the adhesive agent layer 2 provided if necessary, the barrier layer 3 subjected to a chemical conversion treatment on a surface if necessary, the adhesive layer 5 provided if necessary, and the heat-sealable resin layer 4 is formed in the manner described above, and the laminate may be further subjected to a heating treatment of a hot roll contact type, a hot air type, a near-infrared type, a far-infrared type or the like for enhancing the bondability of the adhesive agent layer 2 and the adhesive layer 5 provided if necessary. As conditions for such a heating treatment, for example, the temperature is 150 to 250°C, and the time is 1 to 5 minutes.

In the battery packaging material, the layers that form the laminate may be subjected to a surface activation treatment such as a corona treatment, a blast treatment, an oxidation treatment or an ozone treatment if necessary for improving or stabilizing film formability, lamination processing and final product secondary processing (pouching and embossing molding) suitability, and the like. For example, by subjecting at least one surface of the base material layer to a corona treatment, film formability, lamination processing and final product secondary processing suitability, and the like can be improved. Further, for example, by subjecting a surface of the base material layer 1, which is opposite to the barrier layer 3, to a corona treatment, the ink printability of the surface of the base material layer 1 can be improved.

### 4. Use of battery packaging material

The battery packaging material is used as a packaging for hermetically sealing and storing battery elements such as a positive electrode, a negative electrode and an electrolyte. That is, in a packaging formed of the battery packaging material, a battery element including at least a positive electrode, a negative electrode and an electrolyte can be housed to obtain a battery. A space for storing, for example, the battery element is formed by cold molding to make the battery packaging material into the packaging.

Specifically, a battery element including at least a positive electrode, a negative electrode and an electrolyte is covered with the battery packaging material according to the present invention such that a flange portion (region where a heat-sealable resin layer is in contact with itself) can be formed on the periphery of the battery element while a metal terminal connected to each of the positive electrode and the negative electrode protrudes to the outside, and the heat-sealable resin layer at the flange portion is heat-sealed with itself, thereby providing a battery using a battery packaging material. When the battery element is stored in the packaging formed from the battery packaging material of the present invention, the packaging is formed from the battery packaging material of the present invention such that the sealant portion is on the inner side (surface in contact with the battery element).

The battery packaging material may be used for either a primary battery or a secondary battery, but is preferably used for a secondary battery. The type of a secondary battery to which the battery packaging material of the present invention is applied is not particularly limited, and examples thereof include lithium ion batteries, lithium ion polymer batteries, lead storage batteries, nickel-hydrogen storage batteries, nickel-cadmium storage batteries, nickel-iron storage batteries, nickel-zinc storage batteries, silver oxide-zinc storage batteries, metal-air batteries, polyvalent cation batteries, condensers and capacitors. Among these secondary batteries, preferred subjects to which the battery packaging material of the present invention is applied include lithium ion batteries and lithium ion polymer batteries.

### EXAMPLES

Hereinafter, the present invention will be described in detail by way of examples and comparative examples. It is to be noted, however, that the present invention is not limited to the examples.

(Examples 1 to 6 and Comparative Example 1)

In each of Examples 1 to 6 and Comparative Example 1, measurement of the heat of fusion difference $\Delta H_{1-2}$ of a polyethylene terephthalate film (PET film), and the gradient of a straight line connecting between the yield point and the breaking point in a tensile test, and evaluation of moldability of a battery packaging material were performed in the following manner. The results are shown in Table 1.

(Measurement of heat of fusion difference $\Delta H_{1-2}$)

A heat of fusion difference $\Delta H_{1-2}$ was measured. Here, the heat of fusion difference $\Delta H_{1-2}$ being a difference between a heat of fusion $H_1$ and a heat of fusion $H_2$ which are measured using a differential scanning calorimeter, where the heat of fusion $H_1$ is measured in first measurement with the film heated from a temperature of 0°C to a temperature of 300°C under the condition of a temperature increase rate of 10°C/min, and the heat of fusion $H_2$ is measured in second measurement with the film heated from a temperature of 0°C to a temperature of 300°C under the condition of a temperature increase rate of 10°C/min after being cooled from a temperature of 300°C to a temperature of 0°C under the condition of a temperature decrease rate of 10°C/min after measurement of the heat of fusion $H_1$. The specific measurement conditions are as follows. "DSC-60 Plus" manufactured by Shimadzu Corporation was used as a differential scanning calorimeter, and TA60 manufactured by Shimadzu Corporation was used as analysis software. An aluminum pan was used as a sample pan. For the measurement, a PET film sample was set in an apparatus, then cooled from room temperature to 0°C at a rate of 10°C/min in a nitrogen atmosphere, held at 0°C for 15 minutes, and then heated to 300°C at a rate of 10°C/min. The endothermic peak appearing at this time was defined as a melt peak 1, and the associated heat of fusion was defined as H1. Next, the PET film was heated to 300°C, then held at 300°C for 1 minute, and cooled to 0°C at a rate of 10°C/min again. When the temperature reached 0°C, the PET film was held for 1 minute, and heated to 300°C again. The endothermic peak appearing at this time was defined as a melt peak 2, and the associated heat of fusion was defined as $H_2$ as in the case of the heat of fusion $H_1$. A difference $(H_1 - H_2)$ between the two heats of fusion thus obtained was taken as a heat of fusion difference $\Delta H_{1-2}$. The heat of fusion (heat of transition) was determined from the area of a region surrounded by a straight line connecting between a point between 180°C and 200°C at which departure from the base line occurs before transition and a point between 260°C and 280°C at which return to the base line occurs after transition, and the line of a portion having an endothermic peak as described with reference to the schematic diagram of Fig. 4 in each graph obtained by measurement with a differential scanning calorimeter.

(Measurement of gradient of straight line connecting between yield point and breaking point in tensile test)

Measurement was performed by a tensile test to obtain a stress-strain curve showing a relationship between the stress (MPa) applied to a polyethylene terephthalate film and the associated strain (elongation (%)), the gradient of a straight line connecting between the yield point and the breaking point was measured from the graph, and the ratio of the gradient $S_{TD}$ of the polyethylene terephthalate film in the TD direction to the gradient $S_{MD}$ of the polyethylene terephthalate film in the MD direction ($S_{TD/MD}$) was calculated. The specific measurement conditions are as follows. The PET film was cut into samples each having a size of 100 mm × 15 mm in such a manner that the long side direction was a MD direction and a TD direction. Using Tensilon Versatile Material Tester RTG-1210 manufactured by A&D Company, Limited as a tensile tester, the sample was drawn at a chuck-to-chuck distance of 50 mm and a tension speed of 300 mm/min to obtain a stress-strain curve. The tensile test in the MD direction and the TD direction was conducted for each of 30 samples prepared in the same manner as described above, respectively, for each of the 30 samples prepared in the same manner, the gradients $S_{MD}$ and $S_{TD}$ of the straight line connecting between the yield point and the breaking point were measured from five stress-strain curves with the largest strains (elongations), and the gradient ratio $S_{TD/MD}$ was calculated from an average of the five gradients $S_{MD}$ and an average of the five gradients $S_{TD}$ to determine a value of the gradient ratio $S_{TD/MD}$. A sample with larger strain has a more appropriate broken surface state during preparation of the sample, and has less folds etc. which have an impact on measurement results. The gradients $S_{MD}$ and $S_{TD}$ of the straight line connecting between the yield point and the breaking point can be expressed by the following equations, respectively.

Gradient $S_{MD}$ of straight line connecting between yield point and breaking point = {(tensile breaking stress in MD direction) - (tensile yield stress in MD direction)}/{(tensile breaking strain in MD direction) - (tensile yield strain in MD direction)}

Gradient $S_{TD}$ of straight line connecting between yield point and breaking point = {(tensile breaking stress in TD direction) - (tensile yield stress in TD direction)}/{(tensile breaking strain in TD direction) - (tensile yield strain in TD direction)}

Table 2 shows the measured values of the tensile yield stress (MPa), the tensile breaking stress (MPa), the tensile yield strain (%) and the tensile fracture strain (%) in the MD direction and the TD direction at the yield point and breaking point in tensile tests, and the absolute values (|TD-MD|) of the difference between the measured values in the TD direction and in the MD direction.

(Evaluation of moldability of battery packaging material A)

A battery packaging material A as described later, in which a laminate of a PET film and a biaxially oriented nylon film is used for a base material layer, is cut to a rectangular shape of 90 mm (MD) × 150 mm (TD) to prepare a sample. Using a mold having an opening size of 32 mm (MD) × 54 mm (TD) (female surface has a surface roughness in maximum height (nominal value of Rz) of 3.2 μm as specified in Appendix 1 (Reference) of JIS B 0659-1: 2002, Comparative Surface Roughness Standard Specimen, Table 2) and a corresponding mold (male surface has a surface roughness in maximum height (nominal value of Rz) of 1.6 μm as specified in Appendix 1 (Reference) of JIS B 0659-1: 2002, Comparative Surface Roughness Standard Specimen, Table 2), the sample is cold-molded while the molding depth is changed by units of 0.5 mm from the molding depth of 0.5 mm under a pressing force of 0.9 MPa. This procedure is carried out for 20 samples at each depth. For the sample after the cold molding, the deepest of depths at which none of the 20 samples has pinholes and cracks in the aluminum foil is defined as A mm, and the number of samples having pinholes etc. at the shallowest of depths where pinholes etc. are generated in the aluminum foil is defined as B. The value calculated from the following equation is defined as a molding depth of the battery packaging material A.

$$\text{Molding depth of battery packaging material A} = A \text{ mm} + (0.5 \text{ mm}/20 \text{ pieces})$$

$$\times (20 \text{ pieces-B pieces})$$

(Evaluation of moldability of battery packaging material B)

A battery packaging material B as described later, in which a PET film is used for a base material layer, is cut to a rectangular shape of 90 mm (MD) × 150 mm (TD) to prepare a sample. Using a mold having an opening size of 32 mm (MD) × 54 mm (TD) (female surface has a surface roughness in maximum height (nominal value of Rz) of 3.2 μm as specified in Appendix 1 (Reference) of JIS B 0659-1: 2002, Comparative Surface Roughness Standard Specimen, Table 2) and a corresponding mold (male surface has a surface roughness in maximum height (nominal value of Rz) of 1.6 μm as specified in Appendix 1 (Reference) of JIS B 0659-1: 2002, Comparative Surface Roughness Standard Specimen, Table 2), the sample is cold-molded while the molding depth is changed by units of 0.5 mm from the molding depth of 0.5 mm under a pressing force of 0.4 MPa. This procedure is carried out for 20 samples at each depth. For the sample after the cold molding, the deepest of depths at which none of the 20 samples has pinholes and cracks in the aluminum foil is defined as C mm, and the number of samples having pinholes etc. at the shallowest of depths where pinholes etc. are generated in the aluminum foil is defined as D. The value calculated from the following equation is defined as a molding depth of the battery packaging material B.

$$\text{Molding depth of battery packaging material B} = C \text{ mm} + (0.5 \text{ mm}/20 \text{ pieces})$$

$$\times (20 \text{ pieces-D pieces})$$

(Manufacturing of battery packaging material A)

As a barrier layer, an aluminum foil (thickness: 40 μm) was prepared in which both surfaces were subjected to a chemical conversion treatment (phosphoric acid chromate treatment) with a chemical conversion treatment liquid composed of a phenol resin, a chromium fluoride (trivalent) compound and phosphoric acid. Polyethylene terephthalate films (PET, thickness: 12 μm) each having a heat of fusion difference $\Delta H_{1\text{-}2}$ as shown in Table 1 and the above-described gradient ratio $S_{TD/MD}$ were prepared. Next, each polyethylene terephthalate film and a biaxially oriented nylon film (Ny, thickness: 15 μm) were laminated to each other with the use of a urethane-based adhesive (thickness after curing: 1 μm) to obtain a base material layer. A surface of the base material layer on the nylon film side and one surface of the barrier layer were laminated to each other with the use of a urethane-based adhesive (thickness after curing: 1 μm) to obtain a laminate in which a base material layer, an adhesive agent layer and a barrier layer were laminated in this order. Next, maleic anhydride-modified polypropylene (thickness: 20 μm) as an adhesive layer and polypropylene (thickness: 15 μm) as a heat-sealable resin layer were laminated to a surface of the obtained laminate on the barrier layer side by coextrusion to obtain a laminate in which a base material layer (PET/Ny), an adhesive agent layer, a barrier layer, an adhesive layer and a heat-sealable resin layer were laminated in this order. The obtained laminate was defined as a battery packaging material A.

(Manufacturing of battery packaging material B)

As a barrier layer, an aluminum foil (thickness: 40 $\mu$m) was prepared in which both surfaces were subjected to a chemical conversion treatment (phosphoric acid chromate treatment) with a chemical conversion treatment liquid composed of a phenol resin, a chromium fluoride (trivalent) compound and phosphoric acid. Polyethylene terephthalate films (PET, thickness: 12 $\mu$m) each having a heat of fusion difference $\Delta H_{1-2}$ as shown in Table 1 and the above-described gradient ratio $S_{TD/MD}$ were prepared as base material layers. One surface of the base material layer and one surface of the barrier layer were laminated to each other with the use of a urethane-based adhesive (thickness after curing: 1 $\mu$m) to obtain a laminate in which a base material layer, an adhesive agent layer and a barrier layer were laminated in this order. Next, maleic anhydride-modified polypropylene (thickness: 20 $\mu$m) as an adhesive layer and polypropylene (thickness: 15 $\mu$m) as a heat-sealable resin layer were laminated to a surface of the obtained laminate on the barrier layer side by coextrusion to obtain a laminate in which a base material layer (PET), an adhesive agent layer, a barrier layer, an adhesive layer and a heat-sealable resin layer were laminated in this order. The obtained laminate was defined as a battery packaging material B.

[Table 1]

| | Heat of fusion (J/g) | | | Gradient of straight line connecting between yield point and breaking point in tensile test | | | Molding depth of battery packaging material A using PET/Ny for base material layer (mm) | Molding depth of battery packaging material B using PET for base material layer (mm) |
|---|---|---|---|---|---|---|---|---|
| | $H_1$ | $H_2$ | Difference $\Delta H_{1-2}$ | $S_{MD}$ | $S_{TD}$ | $S_{TD/MD}$ | | |
| Example 1 | 55.36 | 39.49 | 15.87 | 1.17 | 2.60 | 2.22 | 7.2 | 5.3 |
| Example 2 | 51.36 | 40.25 | 11.11 | 1.24 | 1.45 | 1.17 | 7.0 | 5.1 |
| Example 3 | 53.58 | 40.31 | 13.27 | 1.78 | 1.80 | 1.01 | 10.1 | 6.3 |
| Example 4 | 54.71 | 41.71 | 13.00 | 0.62 | 2.69 | 4.34 | 7.3 | 5.4 |
| Example 5 | 51.17 | 40.34 | 10.83 | 1.54 | 1.59 | 1.03 | 7.1 | 5.3 |
| Example 6 | 48.86 | 42.70 | 6.16 | 1.09 | 1.51 | 1.39 | 7.3 | 5.2 |
| Comparative Example 1 | 46.19 | 40.67 | 5.52 | 2.94 | 1.97 | 0.67 | 6.4 | 4.8 |

In Table 1, PET means a polyethylene terephthalate film and Ny means a biaxially oriented nylon film.
It is apparent that the battery packaging materials of Examples 1 to 6, in which a polyethylene terephthalate film having a heat of diffusion difference $\Delta H_{1-2}$ of 6 J/g or more is used for the base material layer, exhibit excellent moldability. Comparison between examples with the almost the same value of heat of fusion difference $\Delta H_{1-2}$ shows that an example in which the gradient ratio $S_{TD/MD}$ is close to 1 is superior in moldability. That is, comparison between Example 3 and Example 4 shows that Example 3 is superior in moldability, and comparison between Example 2 and Example 5 shows that Example 5 is superior in moldability. In Example 6, the heat of fusion $\Delta H_{1-2}$ difference is close to the lower limit which is 6 J/g, but the value of the gradient ratio $S_{TD/MD}$ is close to 1, so that excellent moldability is obtained.

[Table 2]

| | Yield point | | | | | | Breaking point | | | | | |
|---|---|---|---|---|---|---|---|---|---|---|---|---|
| | Tensile yield stress (MPa) | | | Tensile yield strain (%) | | | Tensile breaking stress (MPa) | | | Tensile breaking strain (%) | | |
| | MD | TD | \|TD-MD\| | MD | TD | \|TD-MD\| | MD | TD | \|TD-MD\| | MD | TD | \|TD-MD\| |
| Example 1 | 109.27 | 107.90 | 1.37 | 105.20 | 104.22 | 0.98 | 205.57 | 270.70 | 65.13 | 187.50 | 166.73 | 20.77 |
| Example 2 | 119.98 | 107.40 | 12.58 | 105.13 | 104.77 | 0.36 | 193.64 | 192.18 | 1.46 | 164.43 | 163.07 | 1.36 |
| Example 3 | 117.66 | 101.88 | 15.78 | 104.81 | 104.84 | 0.03 | 243.42 | 240.18 | 3.24 | 175.60 | 181.87 | 6.27 |
| Example 4 | 109.19 | 98.78 | 10.41 | 106.64 | 104.73 | 1.91 | 158.81 | 260.36 | 101.55 | 187.08 | 164.72 | 22.36 |
| Example 5 | 104.26 | 114.38 | 10.12 | 104.43 | 104.82 | 0.39 | 205.03 | 226.08 | 21.05 | 169.81 | 174.96 | 5.15 |
| Example 6 | 96.83 | 99.36 | 2.53 | 105.33 | 106.90 | 1.57 | 182.08 | 186.31 | 4.23 | 183.89 | 164.63 | 19.26 |
| Comparative Example 1 | 131.42 | 117.31 | 14.11 | 104.39 | 105.71 | 1.32 | 261.63 | 244.57 | 17.06 | 148.65 | 170.15 | 21.50 |

DESCRIPTION OF REFERENCE SIGNS

11: Polyethylene terephthalate film
12: Adhesive agent layer
13: Polyamide film
1: Base material layer
2: Adhesive agent layer
3: Barrier layer
4: Heat-sealable resin layer
5: Adhesive layer
10: Battery packaging material

**Claims**

1. A polyethylene terephthalate film for a battery packaging material which is used for a base material layer of a battery packaging material comprising a base material layer, a barrier layer and a heat-sealable resin layer in this order,
   the polyethylene terephthalate film having a heat of fusion difference $\Delta H_{1-2}$ of 6 J/g or more as determined by the following method:
   a heat of fusion $H_1$ and a heat of fusion $H_2$ are measured using a differential scanning calorimeter in accordance with JIS K7122-2012, where the heat of fusion $H_1$ is measured in first measurement with the film heated from a temperature of 0°C to a temperature of 300°C under the condition of a temperature increase rate of 10°C/min, and the heat of fusion $H_2$ is measured in second measurement with the film heated from a temperature of 0°C to a temperature of 300°C under the condition of a temperature increase rate of 10°C/min after being cooled from a temperature of 300°C to a temperature of 0°C under the condition of a temperature decrease rate of 10°C/min after measurement of the heat of fusion $H_1$; and the heat of fusion $H_2$ is subtracted from the heat of fusion $H_1$ to calculate the heat of fusion difference $\Delta H_{1-2}$.

2. The polyethylene terephthalate film for a battery packaging material according to claim 1, which has a thickness of 5 μm or more.

3. A battery packaging material comprising a laminate including at least a base material layer, a barrier layer and a heat-sealable resin layer in this order,
   the base material layer including a polyethylene terephthalate film having a heat of fusion difference $\Delta H_{1-2}$ of 6 J/g or more, the heat of fusion difference $\Delta H_{1-2}$ being a difference between a heat of fusion $H_1$ and a heat of fusion $H_2$ which are measured using a differential scanning calorimeter in accordance with JIS K7122-2012, where the heat of fusion $H_1$ is measured in first measurement with the film heated from a temperature of 0°C to a temperature of 300°C under the condition of a temperature increase rate of 10°C/min, and the heat of fusion $H_2$ is measured in second measurement with the film heated from a temperature of 0°C to a temperature of 300°C under the condition of a temperature increase rate of 10°C/min after being cooled from a temperature of 300°C to a temperature of 0°C under the condition of a temperature decrease rate of 10°C/min after measurement of the heat of fusion $H_1$.

4. A battery, wherein a battery element including at least a positive electrode, a negative electrode and an electrolyte is stored in a package formed of the battery packaging material described in claim 3.

5. A method for manufacturing a battery packaging material, comprising the step of laminating a base material layer, a barrier layer and a heat-sealable resin layer in this order to obtain a laminate,
   the base material layer including a polyethylene terephthalate film having a heat of fusion difference $\Delta H_{1-2}$ of 6 J/g or more, the heat of fusion difference $\Delta H_{1-2}$ being a difference between a heat of fusion $H_1$ and a heat of fusion $H_2$ which are measured using a differential scanning calorimeter in accordance with JIS K7122-2012, where the heat of fusion $H_1$ is measured in first measurement with the film heated from a temperature of 0°C to a temperature of 300°C under the condition of a temperature increase rate of 10°C/min, and the heat of fusion $H_2$ is measured in second measurement with the film heated from a temperature of 0°C to a temperature of 300°C under the condition of a temperature increase rate of 10°C/min after being cooled from a temperature of 300°C to a temperature of 0°C under the condition of a temperature decrease rate of 10°C/min after measurement of the heat of fusion $H_1$.

FIG. 1

FIG. 2

FIG. 3

FIG. 4

FIG. 5

## INTERNATIONAL SEARCH REPORT

| International application No. |
| --- |
| PCT/JP2019/012939 |

**A. CLASSIFICATION OF SUBJECT MATTER**
Int.Cl. C08J5/18(2006.01)i, B32B27/36(2006.01)i, H01M2/02(2006.01)i

According to International Patent Classification (IPC) or to both national classification and IPC

**B. FIELDS SEARCHED**

Minimum documentation searched (classification system followed by classification symbols)
Int.Cl. C08T5/18, B32B27/36, H01M2/02

Documentation searched other than minimum documentation to the extent that such documents are included in the fields searched
| | |
| --- | --- |
| Published examined utility model applications of Japan | 1922–1996 |
| Published unexamined utility model applications of Japan | 1971–2019 |
| Registered utility model specifications of Japan | 1996–2019 |
| Published registered utility model applications of Japan | 1994–2019 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X<br>Y | JP 2010-248496 A (MITSUBISHI PLASTICS, INC.) 04 November 2010, paragraphs [0021]-[0024], [0030]-[0032] & WO 2010/110273 A1 & CN 102282198 A & KR 10-2012-0000093 A | 1-2, 5<br>3-4 |
| Y<br>A | JP 2016-181503 A (DAINIPPON PRINTING CO., LTD.) 13 October 2016, fig. 1, paragraph [0014] & WO 2016/125912 A1 | 3-4<br>1-2, 5 |
| A | JP 2014-88547 A (TORAY INDUSTRIES, INC.) 15 May 2014, paragraph [0014] (Family: none) | 1-5 |
| A | WO 2016/147767 A1 (TORAY INDUSTRIES, INC.) 22 September 2016, paragraphs [0014]-[0017] & CN 107108927 A & KR 10-2017-0129094 A & TW 201641550 A | 1-5 |

☐ Further documents are listed in the continuation of Box C.     ☐ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>06 June 2019 (06.06.2019) | Date of mailing of the international search report<br>18 June 2019 (18.06.2019) |
| --- | --- |
| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014197559 A